# EUROPÄISCHE PATENTANMELDUNG

(11) **EP 2 824 387 A1**
(43) Veröffentlichungstag der Anmeldung: **14.01.2015**
(21) Anmeldenummer: 13175460.8
(22) Anmeldetag: 08.07.2013
(51) Int. Cl.: F21V 8/00, F21S 8/10

(54) **Lichtleiterelement, Verfahren zu dessen Herstellung, sowie Leuchtmittel und Kraftfahrzeugleuchte mit einem solchen Lichtleiterelement**

(71) Anmelder: Odelo GmbH, 71409 Schwaikheim (DE)
(72) Erfinder: Schwegler, Veit, 70372 Stuttgart (DE)
(74) Vertreter: Benninger, Johannes

(57) **Zusammenfassung**

Es werden ein Lichtleiterelement (01), ein Verfahren zu dessen Herstellung, ein ein solches Lichtleiterelement (01) umfassendes Leuchtmittel (12) sowie eine Kraftfahrzeugleuchte umfassend ein Leuchtmittel (12) mit einem solchen Lichtleiterelement (01) beschrieben. Das Lichtleiterelement (01) ist mit jeweils einer oder mehreren Lichteinkoppelflächen (02) und Lichtaustrittsflächen (03) sowie gegebenenfalls einer oder mehreren, zumindest einer Lichtaustrittsfläche (03) zugeordneten Lichtumlenkflächen (04) ausgestattet. Das Lichtleiterelement (01) weist mindestens zwei miteinander stoffschlüssig verbundene Lichtleiterpartien (08) auf, von denen zumindest eine Lichtleiterpartie (08) eine zumindest eine Lichtaustrittsfläche (03) umfassende Auskoppellichtleiterpartie (32) und mindestens eine Lichtleiterpartie (08) eine wenigstens eine Lichteinkoppelfläche (02) umfassende Lichteinkoppelpartie (33) des Lichtleiterelements (01) bildet. Zwischen den Lichtleiterpartien (08) ist zumindest abschnittsweise mindestens eine Schicht (34) eingebracht, von welcher mindestens einen Schicht (34) wenigstens eine Schicht (34) zumindest für eine der Lichtleiterpartien (08) eine optisch wirksame Oberfläche (05) bildet.

## Beschreibung

Die Erfindung betrifft ein vorzugsweise für eine Kraftfahrzeugleuchte vorgesehenes Lichtleiterelement gemäß dem Oberbegriff des Anspruchs 1, ein Verfahren zur Herstellung eines solchen Lichtleiterelements gemäß dem Oberbegriff des Anspruchs 6, sowie ein mindestens ein solches Lichtleiterelement umfassendes, bevorzugt zur Erfüllung einer Lichtfunktion einer Kraftfahrzeugleuchte vorgesehenes Leuchtmittel gemäß dem Oberbegriff des Anspruchs 12 und eine Kraftfahrzeugleuchte mit einem solchen Lichtleiterelement gemäß dem Oberbegriff des Anspruchs 15.

Jede Kraftfahrzeugleuchte erfüllt je nach Ausgestaltung eine oder mehrere Aufgaben bzw. Funktionen, zu deren Erfüllung je mindestens eine Lichtfunktion der Kraftfahrzeugleuchte vorgesehen ist. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Eine Kraftfahrzeugleuchte umfasst im Wesentlichen einen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Kraftfahrzeugleuchte.

Wenigstens einer Lichtquelle des Leuchtmittels können ein oder mehrere zur Ausformung einer beispielsweise gesetzlich vorgegebenen Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter gesetzlich vorgegebener Lichtverteilungen beitragenden optischen Struktur versehen ist. Hierdurch kann gegebenenfalls auf eine Optikscheibe verzichtet werden.

Jedes Optikelement, selbst Lichtquellen, beispielsweise der Primäroptikkörper einer LED oder der Glaskolben einer Gasentladungs- oder Glühlampe, ebenso wie beispielsweise eine plan ausgeführte Lichtscheibe bilden und/oder verfügen über optisch wirksame Oberflächen, die den Strahlengang des Lichts von dessen Entstehung am Ort der Lichtemission bis zum Verlassen der Kraftfahrzeugleuchte beeinflussen. Optisch wirksame Oberflächen, an denen ein optischer Übergang zwischen Medien mit unterschiedlichem optischem Brechungsindex stattfinden, werden hierbei als optische Grenzflächen bezeichnet.

Dabei trägt jedes Optikelement, jede optische Grenzfläche sowie jede andere optisch wirksame Oberfläche im Strahlengang des Lichts einer Lichtfunktion vom Ort der Lichtemission bis zum Verlassen durch die Lichtscheibe der Kraftfahrzeugleuchte derart ihren Teil zur Einhaltung einer erwünschten und/oder beispielsweise gesetzlich vorgegebenen Lichtverteilung bei, dass am Ende, wenn das Licht nach dem Passieren der Lichtscheibe die Kraftfahrzeugleuchte verlassen hat, die entsprechende Lichtverteilung der entsprechenden Lichtfunktion erfüllt wird, unabhängig davon, ob ein mehr oder minder großer Teil des hierbei aufgewandten Lichts abweichend von der vorgegebenen Lichtverteilung aus der Kraftfahrzeugleuchte austritt.

Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Als Lichtquellen kommen in Kraftfahrzeugleuchten unter anderem wegen ihres geringen Stromverbrauchs und geringen Bauraumbedarfs vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

Eine typische Anpassung an die Einbausituation betrifft die äußere Gestalt der Kraftfahrzeugleuchte. Diese äußere Gestalt der Kraftfahrzeugleuchte ist beispielsweise durch die gestalterische Formgebung eines Kraftfahrzeugs sowie durch die vorgesehene Kontur der Kraftfahrzeugleuchte vorgegeben und spiegelt sich im so genannten Strakverlauf der Kraftfahrzeugleuchte wider.

Eine weitere typische Anpassung einer Kraftfahrzeugleuchte an die Einbausituation betrifft den zur Verfügung stehenden Bauraum. Dabei wird ein möglichst geringer Bauraumbedarf angestrebt, beispielsweise um bei einer Ausgestaltung einer Kraftfahrzeugleuchte als Heckleuchte mehr Platz für den Kofferraum eines Kraftfahrzeugs zur Verfügung zu haben und um gleichzeitig Material und Gewicht zu sparen, wodurch beispielsweise Energieeinsparungen, wie etwa Verbrauchseinsparungen von Treibstoff oder einer geringeren Belastung eines Stromspeichers einhergehend mit einer Verringerung der Umweltbelastung sowohl bei der Herstellung, als auch im Betrieb des Kraftfahrzeugs erreicht werden können.

Neben der Anpassung an die Einbausituation müssen Kraftfahrzeugleuchten sehr hohe Qualitätsanforderungen erfüllen. So werden beispielsweise bereits geringe Abweichungen von einem homogenen Eindruck des Erscheinungsbilds sowohl im ausgeschalteten Zustand des Leuchtmittels, dem so genannten Kaltzustand, wie beispielsweise ein dunkel erscheinendes Lampenloch, als auch im so genannten Warmzustand bei eingeschaltetem Leuchtmittel, wie beispielsweise hinsichtlich der Ausleuchtung einer Leuchtenkammer und/oder eines Reflektors, und/oder ein möglicherweise blendender direkter Blick des Betrachters auf die Lichtquelle eines Leuchtmittels, als qualitätsmindernd angesehen..

Um den hohen Qualitätsanforderungen an Kraftfahrzeugleuchten gerecht zu werden, ist es deshalb ein Ziel bei der Entwicklung von Kraftfahrzeugleuchten, das oder die Lichtquellen einer oder mehrerer Lichtfunktionen einer Kraftfahrzeugleuchte vor dem direkten Blick eines Betrachters zu verbergen.

Um eine oder mehrere, ihr Licht in einen oder mehrere Reflektoren strahlende Lichtquellen eines Leuchtmittels dem Blick des Betrachters zu entziehen, welches Licht mittels Reflexion an entsprechenden Formen bzw. Reflektorstrukturen auf dem Reflektor, wie etwa Kissen, Walzen, etc., in die gewünschte Richtung gelenkt wird, ist bekannt, die Lichtquelle beispielsweise oberhalb oder unterhalb des Reflektors oder neben diesem anzuordnen und das von ihr abgestrahlte Licht seitlich in einen Reflektor einzustrahlen. Hierdurch ist die Lichtquelle für den Betrachter beim direkten Blick aus normaler Richtung, wie dies der Sicht eines anderen Verkehrsteilnehmers bei in ein Kraftfahrzeug eingebautem Zustand entspricht, auf die Kraftfahrzeugleuchte nicht erkennbar. Diese wird erst sichtbar, sobald der Betrachter von oben oder unten her in die Kraftfahrzeugleuchte blickt. Da dies tatsächlich eher selten vorkommt, können Lichtquellen auf diese Art gut verborgen werden und der Reflektor weitestgehend lampenlochfrei gehalten werden.

Aufgrund der meist starken Strakverläufe ist es jedoch nicht immer möglich die Lichtquellen in einer lichttechnisch günstigen Lage, wie etwa direkt abstrahlend oder von oben oder unten her in den Reflektor einstrahlend einzubinden. Zum anderen kann hierdurch unabhängig vom Strakverlauf nicht vollständig sichergestellt werden, dass dadurch ein direkter Blick auf die Lichtquelle von außen durch die Lichtscheibe hindurch vollständig verwehrt ist.

So kommt es insbesondere bei starken Strakverläufen vor, dass die Lichtquellen bei der Betrachtung von außerhalb der Kraftfahrzeugleuchte durch die Lichtscheibe hindurch teilweise sichtbar sind. Eine zumindest aus einigen Blickwinkeln von außerhalb der Kraftfahrzeugleuchte durch die Lichtscheibe hindurch sichtbare Lichtquelle eines zur Erfüllung einer Lichtfunktion vorgesehenen Leuchtmittels wird als störend und den Qualitätseindruck nachhaltig negativ beeinflussend empfundenen.

Ein vollständiges Verbergen der Lichtquellen ist erst z. B. mittels auch als Lichtleiter und/oder lichtleitende Optikkörper bezeichneter Lichtleiterelemente möglich, die das von einer verborgen angeordneten Lichtquelle in sie eingekoppelte Licht zu leiten entfernt von der Einkopplung wieder auskoppeln. Das ausgekoppelte Licht kann dabei direkt, ohne einen Reflektor in der gewünschten Richtung abgestrahlt werden, oder indirekt, indem es in einen Reflektor eingestrahlt wird, der es dann in die gewünschte Richtung reflektiert.

Lichtleiterelemente werden zunehmend anstelle von oder zusätzlich zu einem oder mehreren der erwähnten Optikelemente in Kraftfahrzeugleuchten eingesetzt, beispielsweise gerade weil diese eine für einen Betrachter verborgene Anordnung der Lichtquelle ermöglichen.

Ein Lichtleiterelement besteht aus mindestens einer Lichteinkoppelpartie sowie mindestens einer Lichtauskoppelpartie. Die Lichtführung innerhalb des Lichtleiterelements erfolgt quasi verlustfrei vermittels Totalreflexion (TIR; Total Internal Reflexion). Unter anderem kann hierdurch zumindest zum Teil auf andere Optikelemente verzichtet werden. Beim zur Herstellung von Lichtleiterelementen verwendeten Material handelt es sich überwiegend um transparente Kunststoffe. Die Herstellung der Lichtleiterelemente kann dadurch kostengünstig und automatisiert im Spritzguss erfolgen.

Die Lichteinkoppelpartie umfasst wenigstens eine zur Lichteinkopplung von mindestens einer Lichtquelle zumindest eines Leuchtmittels vorgesehene Lichteinkoppelfläche.

Die Lichtauskoppelpartie umfasst mindestens eine zur Lichtauskopplung des in das Lichtleiterelement eingekoppelten Lichts vorgesehene, vorzugsweise auf der Lichtleitervorderseite angeordnete, von der Lichteinkoppelfläche verschiedene Lichtaustrittsfläche, sowie gegebenenfalls mindestens eine wenigstens einer Lichtaustrittsfläche zugeordnete, von dieser zugeordneten Lichtaustrittsfläche verschiedene, beispielsweise auf der Lichtleiterrückseite gegenüber der Lichtaustrittsfläche angeordnete Lichtumlenkfläche.

Zumindest die Lichteinkoppelfläche, die Lichtaustrittsfläche sowie die gegebenenfalls vorgesehene Lichtumlenkfläche stellen dabei optisch wirksame Oberflächen des Lichtleiterelements dar. Bei der Lichteinkoppelfläche und der Lichtaustrittsfläche handelt es sich hierbei um optische Grenzflächen als optisch wirksame Oberflächen. Bei den verbleibenden Oberflächen des Lichtleiterelements kann es sich ebenfalls um optisch wirksame Oberflächen handeln, sofern diese frei von einer unerwünschten Lichtauskopplung durch Totalreflexion zur Lichtführung beitragen.

Damit das in ein Lichtleiterelement eingekoppelte Licht einer beispielsweise gesetzlich vorgegebenen Lichtverteilung genügend oder beitragend via der Lichtaustrittsfläche wieder austreten kann, kann die Lichtaustrittsfläche und/oder eine gegebenenfalls vorgesehene Lichtumlenkfläche mit Lichtauskoppelstrukturen versehen sein. An der Lichtaustrittsfläche angeordnete Lichtauskoppelstrukturen stehen dabei unter einem Winkel zum in das Lichtleiterelement eingekoppelten Licht, bei dem keine Totalreflexion stattfindet und das Licht gegebenenfalls unter Brechung beim Übergang vom Material des Lichtleiterelements zum dieses umgebenden Medium in einer oder mehreren, einer vorgegebenen Lichtverteilung genügenden oder beitragenden Richtungen aus der Lichtaustrittsfläche austritt. Alternativ oder zusätzlich an einer Lichtumlenkfläche vorgesehene Lichtauskoppelstrukturen hingegen lenken das in das Lichtleiterelement eingekoppelte Licht unter einem Winkel zur Lichtaustrittsfläche hin, bei dem an dieser keine Totalreflexion mehr stattfindet, so dass das Licht den Übergang zwischen dem Material des Lichtleiterelements und dem dieses umgebenden Medium im Bereich der Lichtaustrittsfläche passieren kann. Bei dieser Passage tritt das Licht wiederum gegebenenfalls unter Brechung beim Übergang vom Material des Lichtleiterelements zum dieses umgebenden Medium in einer oder mehreren, einer vorgegebenen Lichtverteilung genügenden oder beitragenden Richtungen aus der Lichtaustrittsfläche aus.

Dabei können eine oder mehrere Lichtaustrittsflächen und/oder eine oder mehrere gegebenenfalls vorgesehene, einer oder mehreren Lichtaustrittsflächen zugeordnete Lichtumlenkflächen mit Lichtauskoppelstrukturen und/oder frei von Lichtauskoppelstrukturen ausgeführt sein.

Diese Lichtauskoppelstrukturen können beispielsweise eine Prismenstruktur umfassen, bestehend aus mehreren Prismenelementen als Lichtauskoppelemente.

Das Lichtleiterelement kann beispielsweise stabförmig als so genanntes Stablichtleiterelement und/oder flächig als so genanntes Flächenlichtleiterelement ausgebildet sein, mit einer oder mehreren, auf seiner beispielsweise in Richtung einer Hauptabstrahlrichtung orientierten Vorderseite angeordneten Lichtaustrittsflächen.

Ein Lichtleiterelement, in das Licht mindestens einer Lichtquelle an mindestens einer Lichteinkoppelfläche ein- und an mindestens einer von der Lichteinkoppelfläche verschiedenen Lichtaustrittsfläche wieder ausgekoppelt wird, kann dabei als ein separates Bauteil beispielsweise im Leuchteninnenraum einer Kraftfahrzeugleuchte beherbergt oder Teil eines Leuchtmittels sein.

Nachteilig an Lichtleiterelementen ist, dass ein insbesondere einem starken Strakverlauf angepasster Lichtleiter eine inhomogene Ausleuchtung durch das in ihn eingekoppelte Licht erfährt, was wiederum als qualitätsmindernd empfunden wird. Zur Erfüllung der hohen Qualitätsanforderungen wird deshalb eine möglichst homogene Leuchtdichteverteilung entlang des Lichtleiterelements angestrebt.

Um bei einem beliebigen Strakverlauf eine besonders homogene Ausleuchtung einhergehend mit einem besonders homogenen Erscheinungsbild zu erhalten ist durch EP 2 584 249 A1 ein Lichtleiterelement bekannt, welches eine Lichteinkoppelpartie mit einer zur Lichteinkopplung von mindestens einer Lichtquelle zumindest eines Leuchtmittels vorgesehene Lichteinkoppelfläche sowie Lichtauskoppelpartie mit einer zur Lichtauskopplung des in das Lichtleiterelement eingekoppelten Lichts vorgesehene, vorzugsweise auf der Lichtleitervorderseite angeordnete, von der Lichteinkoppelfläche verschiedene Lichtaustrittsfläche aufweist. Das Lichtleiterelement umfasst eine Auskoppellichtleiterpartie, eine hiervon beabstandete und sich zumindest entlang der Länge der Auskoppellichtleiterpartie erstreckende Zuführungslichtleiterpartie, sowie mindestens eine die Auskoppellichtleiterpartie und die Zuführungslichtleiterpartie zumindest entlang der Länge der Auskoppellichtleiterpartie lichttechnisch wirksam miteinander verbindende Stegpartie. Die Stegpartie überbrückt die Beabstandung entlang der Länge der Auskoppellichtleiterpartie zwischen dieser und der Zuführungslichtleiterpartie zumindest abschnittsweise. Die Zuführungslichtleiterpartie umfasst die Lichteinkoppelpartie. Die Auskoppellichtleiterpartie umfasst die Lichtauskoppelpartie. Vermittels der durch die mindestens eine Stegpartie hergestellten lichttechnisch wirksamen Verbindung wird kontinuierlich über die ganze Länge der Auskoppellichtleiterpartie Licht aus der Zuführungslichtleiterpartie in die Auskoppellichtleiterpartie übergekoppelt.

Ein bereits zuvor angeschnittenes Problem bei der Erfüllung der Vorgaben einer beispielsweise gesetzlich vorgegebenen Lichtverteilung einer Lichtfunktion einer Kraftfahrzeugleuchte mittels der bekannten Optikelemente einschließlich der bekannten Lichtleiterelemente ist eine nur eingeschränkte optische Güte. Dies ist dadurch bedingt, dass zur Erfüllung einer vorgegebenen Lichtverteilung ein mehr oder minder großer Teil des für eine Lichtfunktion aufgewandten Lichts abweichend von der vorgegebenen Lichtverteilung aus der Kraftfahrzeugleuchte austritt. Eine Ursache hierfür ist, dass die ein Verhältnis des in einer gewünschten Lichtverteilung aus einer Kraftfahrzeugleuchte austretenden und einer Lichtfunktion zugeordneten Lichts zu dem von der oder den zur Erfüllung der Lichtfunktion vorgesehenen Lichtquellen ausgestrahlten Lichts widerspiegelnde optische Güte unter Anderem abhängig ist von:
- der Genauigkeit der relativen Ausrichtung der zur Erzeugung der gewünschten Lichtverteilung benötigten, im Strahlengang von der mindestens einen Lichtquelle bis zum Austritt aus der Kraftfahrzeugleuchte durch die Lichtscheibe hindurch angeordneten Optikelemente. Die optische Güte ist beispielsweise um so geringer, je ungenauer die zur Erzielung der gewünschten Lichtverteilung benötigten Bauteile beginnend bei der Lichtquelle relativ zueinander ausgerichtet sind.
- der Präzision sämtlicher im Strahlengang vom Ort der Lichtemission bis zum Verlassen der Lichtscheibe optisch wirksamen Oberflächen, einschließlich optischer Grenzflächen, wie etwa der Oberflächenbeschaffenheit der erwähnten Optikelemente und/oder der Lichtquelle selbst. So trägt die Qualität beispielsweise der Oberflächen der Lichtaustritts- und der gegebenenfalls vorgesehenen Lichtumlenkflächen eines Lichtleiterelements wesentlich zur optischen Güte bei, weil das in ein Lichtleiterelement eingekoppelte Licht um so genauer einer vorgegebeben Lichtverteilung beitragend wieder aus dem Lichtleiterelement austritt, je präziser diese Oberflächen beschaffen sind.

Einen Einfluss auf die optische Güte hat damit auch die Anzahl an optischen Übergängen im Strahlengang zwischen Medien mit unterschiedlichem optischem Brechungsindex.

Bedingt durch Abweichungen von einer theoretischen, optimalen Anordnung und Ausgestaltung aller Optikelemente einschließlich Lichtleiterelemente sowie aller optisch wirksamen Oberflächen einschließlich optischer Grenzflächen muss damit ein wesentlich höherer Lichtstrom aufgewandt werden, als einer beispielsweise gesetzlich vorgegebenen Lichtverteilung entsprechend aus einer Kraftfahrzeugleuchte austritt. Dabei verschlechtert sich die optische Güte, je mehr Licht abweichend von einer erwünschten oder erforderlichen, beispielsweise gesetzlich vorgegebenen Lichtverteilung verloren geht. Dies hat einerseits einen hohen Bauraumbedarf zur Folge, zieht andererseits aufgrund der hierfür erforderlichen stärkeren und/oder mehreren Lichtquellen höhere Kosten nach sich und führt außerdem zu einem unnötig hohen Stromverbrauch einhergehend mit einer stärkeren Belastung und damit Auslegung des Bordnetzes eines Kraftfahrzeugs.

Mit Lichtleiterelementen kann im Vergleich zu mehreren einzeln oder gruppenweise im Leuchteninnenraum montierten Optikelementen eine Verbesserung der optische Güte erhalten werden.

So ist beispielsweise zum Erhalt einer hohen optischen Güte durch DE 10 2006 034 070 A1 und durch EP 1 881 258 A1 bekannt, einen eine definierte Abstrahlcharakteristik erzeugenden Lichtverteilkörper als Primäroptik unmittelbar an eine LED anzuspritzen, wodurch einerseits eine genaue Ausrichtung von LED und Lichtverteilkörper und andererseits eine Verringerung der Anzahl optischer Grenzflächen erhalten wird.

Die optische Güte von Lichtleiterelementen ist jedoch herstellungsbedingt nach wie vor eingeschränkt. Dies liegt vor allem daran, dass die maximal zu erhaltende Qualität der optisch wirksamen Oberflächen einschließlich optischer Grenzflächen eines Lichtleiterelements abhängig ist von der im für die Herstellung des Lichtleiterelements vorgesehenen Spritzgusswerkzeug erzeugbaren Oberflächengüte. Diese Oberflächengüte ist beschränkt durch die zur Erzeugung des Spritzgusswerkzeugs verwendbaren Werkzeuge. Bei diesen Werkzeugen handelt es sich vor allem um Fräswerkzeuge, die bei noch so genauem Einsatz eine zumindest mikroskopische Oberflächenstrukturierung hinterlassen. Diese mikroskopische Oberflächenstrukturierung legt die maximal zu erhaltende Qualität der optisch wirksamen Oberflächen eines im Spritzgussverfahren hergestellten Lichtleiterelements fest, unabhängig davon, ob die optisch wirksame Oberfläche und/oder optische Grenzfläche mit Lichtauskoppelstrukturen und/oder frei von Lichtauskoppelstrukturen ausgeführt ist.

Durch DE 195 07 901 A1 ist bekannt, ein Stablichtleiterelement mit einer optisch beabstandeten Umhüllung zumindest teilweise zu umgeben. Ein- oder beidseitig an den Stirnseiten eingekoppeltes Licht, welches durch den die beiden Stirnseiten verbindenden Mantel des Stablichtleiterelements entlang diesem austritt, wird durch die Umhüllung teils wieder zum Mantel zurück reflektiert und teils durch die Umhüllung hindurch abgestrahlt. Die Umhüllung kann mit einer Lichtleiterfolie mit prismatischen Riefen längs einer sich zwischen den beiden Stirnseiten des Stablichtleiterelements erstreckenden Lichtleiterachse oder mit außenverzahnten Röhren ähnlicher Geometrie ausgeführt sein.

Durch DE 10 2006 060 409 A1 sind ein Lichtleiterelement und ein Verfahren zu dessen Herstellung bekannt. Das Lichtleiterelement besteht aus einem Grundkörper mit senkrecht oder parallel zueinander angeordneter Lichteinkoppelfläche und Lichtaustrittsfläche sowie auf der Lichtaustrittsfläche angeordneten Lichtauskoppelementen. Das Herstellungsverfahren sieht vor, die Lichtauskoppelemente auf eine Folie separat vom Grundkörper aufzutragen. Das Auftragen der Auskoppelelemente auf die Folie erfolgt durch Aufdrucken bevorzugt im Tintenstrahldruck mit einer Auflösung von 1200 bis 1440 dpi. Die Auskoppelelemente sind dabei aus einem getrockneten Beschichtungsmaterial gebildet und können farbig ausgebildet sein. Die Folie mit den Auskoppelelementen wird nachfolgend auf dem Grundkörper angeordnet, oder dient der Übertragung der Auskoppelelemente auf den Grundkörper, wobei die Folie nach der Übertragung der Auskoppelelemente auf den Grundkörper abgelöst wird. Damit sind die Auskoppelelemente durch die Folie von der Lichtaustrittsfläche beabstandet oder stehen in direktem Kontakt mit der Lichtaustrittsfläche. Eine thermomechanische Fixierung, im ersten Fall der Folie, im zweiten Fall der Auskoppelelemente, kann der haftvermittlerfreien Befestigung auf dem Grundkörper dienen. Die thermomechanische Fixierung erfolgt durch Erwärmung der Folie vor dem Anpressen auf den Grundkörper oder durch Anordnen auf dem Grundkörper und anschließendes Anpressen mit einer geheizten Platte. Die Auskoppelelemente sind vor dem Anordnen auf dem Grundkörper im Querschnitt kreisförmig, danach können sie zusammengedrückt sein, wobei sie eine ovale Form im Querschnitt einnehmen.

Durch DE 10 2009 041 243 A1 und durch DE 10 2009 041 244 A1 sind zum Herstellen von Formkörpern das so genannte In-Mold-Labeling (IML) und In-Mold-Decoration (IMD) bekannt. Mit diesen Verfahren werden in einem Spritzgießwerkzeug mehrschichtige Strukturen geschaffen. Sie umfassen Prozesse, bei denen flächige, ebene oder bereits geformte, oder strukturierte Substrate, wie etwa Folien, mit einer Materialmasse, zum Beispiel mit Kunststoff, metall- oder glashaltigen Materialien hinterspritzt oder hinterschäumt werden. Vorgeformte Folien, beispielsweise aus Kunststoff, wie Polycarbonat, oder Holzfurnier erhalten vor der Hinterspritzung die gewünschte endgültige dreidimensionale Form in einem Verformungsprozess und können zumindest teilweise bedruckt sein. Zur Herstellung einer Gerätefront mit hinterleuchteten Bedienmitteln ist dabei die Verwendung eines vorgefertigten Folieneinlegers vorgesehen, der transparent, kratzfest, lichtstabil und teilweise bedruckt ist, stabile Randgebiete hat, bereits die endgültige Oberflächenform der Gerätefront festlegt, eine lichtdurchlässige Schicht aufweist, die als Lichtleiter ausgeführt ist, sowie eine lichtundurchlässige Schicht aufweist, die durch ihre Materialeigenschaften und Gestaltung den unkontrollierten Austritt von Nebenlicht an beleuchteten bzw. hinterleuchteten Bereichen der Gerätefront verhindert. Zur Herstellung eines be- bzw. hinterleuchteten Bedienelements kann der Folieneinleger dreidimensional geformt sein.

Beim IML-Verfahren handelt es sich um ein Spritzgussverfahren, bei dem in das Spritzgusswerkzeug eingelegte Substrate wie Stoff, Papier, Furniere oder beliebig bedruckte oder strukturierte Folien hinterspritzt werden. Beim IMD-Verfahren wird die Folie im Gegensatz zum IML-Verfahren nicht in das Spritzgusswerkzeug eingelegt, sondern als ein Folienband z.B. motorisch durch das Spritzgusswerkzeug hindurch gerollt. Durch Sensoren werden die einzelnen Grafiken positioniert. Dieses Verfahren weist eine wesentlich bessere Qualität als das IML-Verfahren auf.

Durch DE 10 2010 001 266 A1 ist ein Lichtleiterelement bestehend aus parallel zueinander aufeinander liegend aufgestapelten Platten bekannt. Jede Platte ist dabei abschnittsweise mit Lichtauskoppelelementen zur Lichtumlenkung in eine gemeinsame Richtung versehen. Eine Schmalseite des Plattenstapels bildet die Lichteinkoppelfläche des Lichtleiterelements. Das Lichtleiterelement weist eine parallel zur obersten Platte gebildeten Ebene liegende Lichtauskoppelfläche auf.

Der Erfindung liegt die Aufgabe zu Grunde, ein Lichtleiterelement sowie ein Verfahren zu dessen Herstellung anzugeben, mit denen bei verringertem Bauraumbedarf eine besonders homogene Ausleuchtung und damit ein besonders homogenes Erscheinungsbild erhalten werden und eine höhere optische Güte erzielt werden kann. Ferner ist es Aufgabe der Erfindung ein wenigstens ein solches Lichtleiterelement und mindestens eine Lichtquelle umfassendes Leuchtmittel sowie eine mit einem solchen Lichtleiterelement ausgestattete Kraftfahrzeugleuchte anzugeben.

Die Aufgabe wird jeweils gelöst mit den Merkmalen der unabhängigen Ansprüche.

Ein erster Gegenstand der Erfindung betrifft demnach ein beispielsweise stabförmiges, vorzugsweise beispielsweise in einer Ebene und/oder besonders bevorzugt dreidimensional im Raum gekrümmt verlaufendes Lichtleiterelement mit mindestens einer Lichteinkoppelfläche sowie mindestens einer von der wenigstens einen Lichteinkoppelfläche verschiedenen Lichtaustrittsfläche.

Das Lichtleiterelement zeichnet sich durch mindestens zwei miteinander stoffschlüssig verbundenen Lichtleiterpartien aus, von denen zumindest eine Lichtleiterpartie eine zumindest eine Lichtaustrittsfläche umfassende Auskoppellichtleiterpartie des Lichtleiterelements bildet und mindestens eine Lichtleiterpartie eine wenigstens eine Lichteinkoppelfläche umfassende Lichteinkoppelpartie des Lichtleiterelements bildet. Zwischen den Lichtleiterpartien ist zumindest abschnittsweise mindestens eine Schicht umfassend beispielsweise spiegelnde und/oder opake und/oder lichtumlenkende und/oder lichtauskoppelnde Elemente eingebracht, von welcher mindestens einen Schicht wenigstens eine Schicht zumindest für eine der Lichtleiterpartien eine optisch wirksame Oberfläche bildet.

Durch Variation der Abmessungen der Abschnitte der mindestens einen Schicht und/oder der Abmessungen zwischen den Abschnitten der Schicht kann die Lichtzuführung und/oder Lichtauskopplung in einzelnen Lichtleiterpartien des Lichtleiterelements gezielt gesteuert werden.

Dabei ist eine zumindest abschnittsweise Lichtzuführung und/oder eine zumindest abschnittsweise Lichtauskopplung in den einzelnen Lichtleiterpartien sowie die Lichtüberkopplung zwischen den Lichtleiterpartien durch entsprechende Auswahl der Abmessungen der Abschnitte der mindestens einen Schicht und/oder der Abmessungen eines oder mehrerer Bereiche zwischen zwei oder mehr Abschnitten der mindestens einen Schicht, welche Bereiche frei von der mindestens einen Schicht ausgeführt sind, gezielt einstellbar.

Darüber hinaus kann das Lichtleiterelement, beispielsweise zumindest eine Lichtleiterpartie des Lichtleiterelements, wenigstens eine von der zumindest einen Lichtaustrittsfläche verschiedene Lichtumlenkfläche aufweisen, welche im Lichtleiterelement geführtes Licht innerhalb des Lichtleiterelements gezielt in einer oder mehreren Richtungen zu wenigstens einer Lichtaustrittsfläche hin umlenkt, so dass das Licht an der entsprechenden, zumindest einen Lichtaustrittsfläche gegebenenfalls unter Brechung beim Übergang vom Material des Lichtleiterelements zum umgebenden Medium, beispielsweise zur umgebenden Luft, oder frei von Brechung aus dem Lichtleiterelement ausgekoppelt wird.

Zumindest:
- die mindestens eine Lichteinkoppelfläche,
- die wenigstens eine Lichtaustrittsfläche,
- mindestens eine zwischen den stoffschlüssig miteinander verbundenen Lichtleiterpartien wenigstens abschnittsweise vorgesehene Schicht, sowie
- die mindestens eine gegebenenfalls vorgesehene Lichtumlenkfläche
bilden optisch wirksame Oberflächen und/oder optische Grenzflächen wenigstens einer Lichtleiterpartie des Lichtleiterelements im Sinne der einleitenden Definitionen. Der Ausdruck «zumindest» ist dabei so zu verstehen, dass auch eine oder mehrere verbleibende Oberflächen des Lichtleiterelements oder einer dessen Lichtleiterpartien optisch wirksame Oberflächen bilden können, sofern diese frei von einer unerwünschten Lichtauskopplung durch Totalreflexion zur Lichtführung im Lichtleiterelement beitragen.

Wichtig ist an dieser Stelle hervorzuheben, dass eine zwei oder mehr Lichtleiterpartien voneinander abgrenzende Schicht eine optisch wirksame Oberfläche für wenigstens eine der durch die Schicht beispielsweise voneinander lichttechnisch zumindest entlang eines durch die Schicht gebildeten Abschnitts getrennten Lichtleiterpartien bilden kann.

Trennen mehrere, beispielsweise zwei Schichten zwei Lichtleiterpartien, so kann eine erste, unmittelbar an eine erste Lichtleiterpartie angrenzende Schicht eine optisch wirksame Oberfläche für die erste Lichtleiterpartie bilden, und eine zweite, unmittelbar an eine zweite Lichtleiterpartie angrenzende Schicht eine optisch wirksame Oberfläche für die zweite Lichtleiterpartie bilden. Gegebenenfalls können die beiden, je eine optisch wirksame Oberfläche für eine der durch sie getrennten Lichtleiterpartien bildenden Schichten durch mindestens eine dritte, zwischen den beiden Schichten liegende Schicht voneinander getrennt sein.

Wenigstens eine eine optisch wirksame Oberfläche und/oder optische Grenzfläche und/oder ein Teil einer solchen zumindest einer Lichtleiterpartie bildende Schicht kann auf einem stoffschlüssig mit wenigstens einer Lichtleiterpartie des Lichtleiterelements verbundenen Substrat ausgebildet sein.

Die auf dem Substrat ausgebildete optisch wirksame Oberfläche ist dabei vorzugsweise durch Umformen bevorzugt getrennt von den Lichtleiterpartien des Lichtleiterelements hergestellt.

Das Substrat kann ein Foliensubstrat, besonders bevorzugt eine Folie umfassen. Alternativ oder zusätzlich kann das Substrat ein Gewebe umfassen.

Das Substrat kann zumindest teilweise ausgestanzt sein. Hierdurch können auf einfache Weise die ansonsten zumindest abschnittsweise durch mindestens eine Schicht voneinander getrennten Lichtleiterpartien des Lichtleiterelements frei von entsprechend durch eine oder mehrere durch Umformen hergestellte Oberflächen des Substrats gebildete optisch wirksame Oberflächen gehalten werden. Mit anderen Worten können so der Überkopplung von Licht von einer ersten Lichtleiterpartie in eine zweite Lichtleiterpartie dienende, frei von einer Schicht ausgeführten Bereiche einfach hergestellt werden, indem diese Bereiche frei von entsprechend durch eine oder mehrere durch Umformen hergestellte Oberflächen des Substrats gebildete optisch wirksame Oberflächen gehalten werden.

Die wenigstens abschnittsweise eine optisch wirksame Oberfläche zumindest einer Lichtleiterpartie des Lichtleiterelements bildende Oberfläche des Substrats ist durch Umformung, bevorzugt durch Walzen und/oder Pressen und/oder Prägen des Substrats hergestellt.

In der Einteilung der Fertigungsverfahren nach DIN 8580 ist Umformen der Überbegriff der zweiten Hauptgruppe und steht neben Fertigungsverfahren wie Urformen, Trennen, Fügen, Beschichten und Stoffeigenschaft ändern.

Durch Walzen und/oder Pressen und/oder Prägen wird eine wesentlich höhere Oberflächengüte erhalten, als beispielsweise durch Spritzguss und/oder Bedrucken, wie dies an nachfolgender Stelle ausführlich erläutert wird.

Das Substrat, ebenso wie dessen durch Umformung hergestellte, eine optisch wirksame Oberfläche zumindest einer Lichtleiterpartie des Lichtleiterelements bildende Oberfläche, ist bevorzugt transparent.

Eine auf dem Substrat ausgebildete, optisch wirksame Oberfläche zumindest einer Lichtleiterpartie des Lichtleiterelements bildet vorzugsweise zumindest einen Teil einer:
- Lichteinkoppelfläche und/oder
- Lichtaustrittsfläche und/oder
- Lichtumlenkfläche
wenigstens einer Lichtleiterpartie des Lichtleiterelements im Sinne der einleitenden Definitionen.

Die auf dem Substrat ausgebildete optisch wirksame Oberfläche kann zumindest abschnittsweise mit Lichtauskoppelstrukturen und/oder abschnittsweise frei von Lichtauskoppelstrukturen ausgeführt sein.

Das Substrat kann abschnittsweise mit einer Beschichtung versehen sein, um in solchen Abschnitten, die keine optisch wirksame Oberfläche und/oder zumindest keine optische Grenzfläche bilden, einen Lichtaustritt aus dem Lichtleiterelement vollständig zu unterbinden.

Die Beschichtung kann durch Bedrucken und/oder Metallisieren hergestellt sein.

Im Gegensatz zum Umformen stellt das Bedrucken bzw. Aufdrucken z.B. einer den Lichtaustritt beschränkenden Schablone ein Beschichtungsverfahren dar.

Das Substrat ist vorzugsweise frei von Luftspalten und/oder Einschlüssen stoffschlüssig mit mindestens einer Lichtleiterpartie des Lichtleiterelements verbunden.

Die Lichteinkopplung kann nur via einer der Lichtleiterpartien erfolgen, oder sie kann gleichzeitig in mehrere, jedoch nicht alle, oder sie kann in alle Lichtleiterpartien erfolgen.

Ist die Lichteinkopplung nur via einer der Lichtleiterpartien vorgesehen, so bildet diese die einzige Lichteinkoppelpartie des Lichtleiterelements, welche die mindestens eine zur Lichteinkopplung von mindestens einer Lichtquelle zumindest eines Leuchtmittels vorgesehene Lichteinkoppelfläche umfasst. Die wenigstens eine verbleibende Lichtleiterpartie bildet eine Auskoppellichtleiterpartie mit mindestens einer zur Lichtauskopplung des in das Lichtleiterelement eingekoppelten Lichts vorgesehenen, vorzugsweise auf der Lichtleitervorderseite angeordnete, von der mindestens einen Lichteinkoppelfläche verschiedenen Lichtaustrittsfläche. Die die Lichteinkoppelpartie bildende Lichtleiterpartie kann hierbei gleichzeitig eine Auskoppellichtleiterpartie bilden, sofern die die Lichteinkoppelpartie bildende Lichtleiterpartie gleichzeitig über mindestens eine Lichtaustrittsfläche verfügt.

Erfolgt die Lichteinkopplung in zwei oder mehr Lichtleiterpartien, so bilden diese die Lichteinkoppelpartie des Lichtleiterelements mit den zur Lichteinkopplung von mindestens einer Lichtquelle zumindest eines Leuchtmittels vorgesehenen Lichteinkoppelflächen.

Die Lichtauskopplung kann nur via einer der Lichtleiterpartien erfolgen, oder sie kann gleichzeitig in mehrere, jedoch nicht alle, oder sie kann in alle Lichtleiterpartien erfolgen.

Ist die Lichtauskopplung nur via einer der Lichtleiterpartien vorgesehen, so bildet diese eine Auskoppellichtleiterpartie, welche die mindestens eine zum Austritt von an einer oder mehreren Lichteinkoppelflächen eingekoppelten Lichts vorgesehene Lichtaustrittsfläche umfasst.

Erfolgt die Lichtauskopplung an zwei oder mehr Lichtleiterpartien, so bilden diese die Auskoppellichtleiterpartie des Lichtleiterelements mit den zum Austritt von an einer oder mehreren Lichteinkoppelflächen eingekoppelten Lichts vorgesehenen Lichtaustrittsflächen.

Beispielsweise bei zwei Lichtleiterpartien kann eine Lichtleiterpartie als Lichteinkoppelpartie, die andere als Auskoppellichtleiterpartie fungieren.

Die Lichtleiterpartien können unterschiedlich von der Lichteinkopplung via einer Lichteinkoppelfläche entfernte Lichtaustrittsflächen bedienen. Beispielsweise kann in das Lichtleiterelement eingekoppeltes Licht vermittels einer reflektierend ausgeführten Schicht in einer beispielsweise in einer Draufsicht hinteren Lichtleiterpartie gehalten und dabei weitergeführt werden, bis zum von der Lichteinkoppelfläche entfernten Ende der Lichtaustrittsfläche einer vorderen Lichtleiterpartie, in deren Anschluss dann die Lichtauskopplung aus der hinteren Lichtleiterpartie erfolgen kann.

Die mindestens eine Schicht kann durch eine oder mehrere Beschichtungen und/oder durch eine oder mehrere Folien hergestellt sein.

Dabei kann mindestens eine die Lichtleiterpartien des Lichtleiterelements zumindest abschnittsweise trennende Schicht als ein stoffschlüssig mit einer Lichtleiterpartie des Lichtleiterelements verbundenes Substrat ausgebildet sein.

Eine als Substrat ausgebildete Schicht bildet dabei zumindest für eine der beiden Lichtleiterpartien, zwischen denen die Schicht als wenigstens eine die Lichtleiterpartien trennende Schicht ausgebildet ist, eine optisch wirksame Oberfläche. Die als Substrat ausgebildete Schicht ist bevorzugt durch Umformen getrennt von den Lichtleiterpartien des Lichtleiterelements hergestellt.

Das Substrat kann ein Foliensubstrat, besonders bevorzugt eine Folie umfassen. Alternativ oder zusätzlich kann das Substrat ein Gewebe umfassen.

Die mindestens eine Schicht kann demnach einer oder mehrere Folien oder Foliensubstrate umfassen.

Umfasst zumindest eine Schicht der mindestens einen zwei Lichtleiterpartien trennenden Schicht Substrat, so kann dieses in den frei von der Schicht auszuführenden Abschnitten ausgestanzt sein.

Das mindestens eine Substrat kann unabhängig von den mindestens zwei Lichtleiterpartien beispielsweise durch Umformung eines Ausgangssubstrats hergestellt und beispielsweise zur Verbindung zumindest mit einer ersten Lichtleiterpartie des Lichtleiterelements in ein Spritzgusswerkzeug eingelegt werden.

Zumindest eine der mindestens einen zwei Lichtleiterpartien trennenden Schicht kann abschnittsweise:
- opak und/oder spiegelnd ausgeführt sein, um in mindestens einem mit der mindestens einen Schicht versehenen Abschnitt einen Lichtübertritt zwischen den Lichtleiterpartien zu verhindern, und/oder
- als eine Lichtumlenkfläche ausgebildet sein, um in mindestens einem mit der mindestens einen Schicht versehenen Abschnitt einen Lichtübertritt durch gezielte Umlenkung von einer der beiden Lichtleiterpartien in mindestens eine verbleibende Lichtleiterpartie zu erzwingen, in welcher mindestens einer verbleibenden Lichtleiterpartie dann eine weitere Propagation beispielsweise unter ein- oder mehrfacher Totalreflexion statt finden kann, und/oder
- als eine Lichtumlenkfläche ausgebildet sein, um in mindestens einem mit der mindestens einen Schicht versehenen Abschnitt eine Lichtauskopplung von wenigstens einer der Lichtleiterpartien durch gezielte Umlenkung des Lichts zu einer eine Lichtaustrittsfläche bildenden Oberflächenpartie des Lichtleiterelements erzwingen, auf welche Oberflächenpartie das Licht unter einem Winkel trifft, der kleiner ist, als für eine Totalreflexion erforderlich.

Eine Lichteinkoppelfläche des Lichtleiterelements befindet sich vorzugsweise an einer Stirnseite des Lichtleiterelements, an welche die zumindest zwei Lichtleiterpartien angrenzen.

Eine Lichtauskoppelfläche des Lichtleiterelements verläuft vorzugsweise parallel zum Schichtverlauf zwischen den Lichtleiterpartien.

Die verbleibenden Oberflächenpartien des Lichtleiterelements können zumindest abschnittsweise als Lichtumlenkflächen mit darauf vorgesehenen Lichtauskoppelelementen ausgebildet sein, an denen eine Umlenkung des Lichts zu dessen Auskopplung an einer beispielsweise gegenüberliegenden Lichtaustrittsfläche erfolgen kann.

Zumindest ein Teil der eine Lichtauskopplung von via einer oder mehrerer Lichteinkoppelflächen in das Lichtleiterelement eingekoppelten Lichts aus dem Lichtleiterelement bewirkenden Lichtumlenkflächen kann wie bereits erwähnt ebenfalls durch mindestens eine Schicht hergestellt sein, welche besonders bevorzugt unabhängig von den mindestens zwei Lichtleiterpartien beispielsweise durch Umformung eines Ausgangssubstrats hergestellt sein kann und beispielsweise zur Verbindung zumindest mit einer der Lichtleiterpartien des Lichtleiterelements in ein Spritzgusswerkzeug eingelegt werden kann.

Vorteile gegenüber dem Stand der Technik ergeben sich unter anderem durch eine besonders homogene Ausleuchtung des Lichtleiterelements einhergehend mit einem homogenen Erscheinungsbild. Durch die besonders präzise ausführbare mindestens eine Schicht zwischen den Lichtleiterpartien sowie der ebenfalls entsprechend hergestellten, gegebenenfalls vorgesehenen Lichtumlenkflächen, welche zumindest zum Teil mit einem oder mehreren Abschnitten der mindestens einen Schicht zwischen benachbarten Lichtleiterpartien identisch sein können, wird darüber hinaus eine besonders hohe Präzision der Lichtumlenkflächen und damit der Lichtüberkopplung von einer Lichtleiterpartie in eine andere sowie der Lichtauskopplung aus dem Lichtleiterelement erhalten, einhergehend mit einer besonders hohen optischen Güte.

Ein zweiter Gegenstand der Erfindung betrifft ein Verfahren zur Herstellung eines zuvor beschriebenen Lichtleiterelements.

Das Verfahren sieht vor, zunächst eine erste Lichtleiterpartie stoffschlüssig mit der mindestens einen, in einem oder mehreren Abschnitten vorgesehenen Schicht zu versehen. Anschließend wird die zweite Lichtleiterpartie auf der mit der mindestens einen Schicht versehenen Seite der ersten Lichtleiterpartie stoffschlüssig mit dieser verbunden.

Eine gegebenenfalls vorgesehene dritte oder weitere Lichtleiterpartie kann entsprechend nach dem Auftragen wenigstens einer weiteren Schicht auf der zweiten und/oder der ersten Lichtleiterpartie auf der mit der mindestens einen weiteren Schicht versehenen Seite der zweiten und/oder ersten Lichtleiterpartie stoffschlüssig mit dieser oder diesen verbunden werden.

Das Verfahren kann einleitend vorsehen, als eine allein oder in Verbindung mit mindestens einer weiteren Schicht zumindest abschnittsweise zwei oder mehr Lichtleiterpartien des Lichtleiterelements beispielsweise voneinander lichttechnisch trennende Schicht ein bevorzugt transparentes Substrat bereitzuhalten.

Im Anschluss an die Bereitstellung des Substrats kann das Verfahren vorsehen, wenigstens eine Oberfläche des Substrats durch Umformung des Substrats, vorzugsweise vermittels Walzen und/oder Pressen und/oder Prägen, zu behandeln.

Im Anschluss hieran kann eine erste Lichtleiterpartie stoffschlüssig mit der mindestens einen, in einem oder mehreren Abschnitten vorgesehenen und im fertigen Lichtleiterelement durch das Substrat ausgebildeten Schicht versehen werden, indem das Substrat mit der ersten Lichtleiterpartie des Lichtleiterelements stoffschlüssig verbunden wird.

Bevorzugt weist das Substrat in seiner flächigen Ausdehnung wesentlich größere Abmessungen auf, als normal hierzu. Ein solches Substrat kann als zweidimensional bezeichnet werden, da es als nennenswerte Oberflächen nur eine Oberseite und Unterseite aufweist. Die Oberseite und Unterseite verbindende Schmalseiten weisen hierbei keine nennenswerte Abmessungen auf, wie dies beispielsweise bei dünnen Platten und Folien der Fall ist.

Durch die Behandlung vermittels Umformen kann die als optisch wirksame Oberfläche und/oder optische Grenzfläche zumindest einer Lichtleiterpartie des Lichtleiterelements vorgesehene Oberfläche des Substrats bei Bedarf zumindest abschnittsweise mit Lichtauskoppelstrukturen versehen werden.

Beispielsweise können bei der Behandlung der nach dem stoffschlüssigen Verbinden mindestens eine optisch wirksame Oberfläche zumindest einer Lichtleiterpartie des Lichtleiterelements bildenden Oberfläche des Substrats durch Umformen zumindest abschnittsweise Lichtauskoppelstrukturen auf die behandelte Oberfläche geprägt werden.

Gegebenenfalls vorgesehene Lichtauskoppelstrukturen sind dabei in Negativform auf dem oder den zur Umformung des Substrats vorgesehenen Umformwerkzeugen aufgebracht. Dabei sind für auf der optisch wirksamen Oberfläche vorgesehene Erhebungen Vertiefungen am Umformwerkzeug vorgesehen und entsprechend für auf der optisch wirksamen Oberfläche vorgesehene Vertiefungen Erhebungen am Umformwerkzeug vorgesehen.

Die Oberflächengüte bzw. Beschaffenheit der Oberfläche des Substrats, welche nach dem stoffschlüssigen Verbinden mit zumindest einer Lichtleiterpartie des Lichtleiterelements eine auf dem Substrat ausgebildete optisch wirksame Oberfläche und/oder optische Grenzfläche zumindest der entsprechenden Lichtleiterpartie des Lichtleiterelements bildet, einschließlich deren gegebenenfalls vorgesehener Lichtauskoppelstrukturen, wird dabei durch die Behandlung vermittels Umformung des Substrats erhalten.

Bei der Umformung des Substrats zur Erzeugung der Beschaffenheit und Oberflächengüte der zunächst auf dem Substrat ausgebildeten Oberfläche, welche, durch stoffschlüssige Verbindung mit zumindest einer Lichtleiterpartie des Lichtleiterelements, zu einer optisch wirksamen Oberfläche zumindest der entsprechenden Lichtleiterpartie des Lichtleiterelements wird, kommt bevorzugt Druckumformung, besonders bevorzugt Walzen und/oder Pressen und/oder Prägen zum Einsatz.

Durch das Umformen bevorzugt vermittels Walzen und/oder Pressen und/oder Prägen wird eine wesentlich höhere, das heißt feinere Oberflächengüte erhalten, als dies beispielsweise durch Spritzguss und/oder Bedrucken überhaupt möglich ist. Dies ist unter anderem dadurch bedingt, dass die Oberflächengüte der für die Umformung vorgesehenen Werkzeuge nicht derart beschränkt ist, wie diejenige eines Spritzgusswerkzeugs oder die Auflösung eines Tintenstrahldruckers. So sind die leicht zugänglichen, da beispielsweise konvexen Oberflächen von beispielsweise für das Walzen vorgesehenen Walzen bei deren Herstellung leicht zugänglich und können dadurch in einer wesentlich feineren Beschaffenheit ausgeführt werden, als die in einer Vertiefung liegenden Oberflächen eines Spritzgusswerkzeugs. Diese wesentlich feinere Beschaffenheit des Umformwerkzeugs oder der Umformwerkzeuge wird beim Umformen direkt auf die Oberfläche des Substrats übertragen. Hierdurch erhält die nach dem stoffschlüssigen Verbinden mit zumindest einer der Lichtleiterpartien des Lichtleiterelements mindestens eine optisch wirksame Oberfläche wenigstens der entsprechenden Lichtleiterpartie des Lichtleiterelements bildende Oberfläche des so umgeformten Substrats eine wesentlich präzisere Mikrostrukturierung, die von völlig glatt bis zu einer präzise vorgegebenen Geometrie beispielsweise von Lichtumlenk- oder Lichtauskoppelstrukturen reichen kann.

Ein entsprechend ausgeführtes Substrat kann darüber hinaus zusätzlich beispielsweise als eine strukturierte oder besonders präzise Lichtaustrittsfläche oder Lichtumlenkfläche einer oder mehrerer Lichtleiterpartien des Lichtleiterelements vorgesehen sein.

Insbesondere bei der Verwendung von Walzen und/oder Pressen für das Umformen können Lichtauskoppelstrukturen und/oder Lichtumlenkstrukturen verwirklicht werden, wie sie bislang im Spritzguss nicht verwirklicht werden können. So können im Spritzgusswerkzeug bislang nur durchgängige Riefen als Lichtauskoppelstrukturen und/oder Lichtumlenkstrukturen vorgesehen werden, weil zu wenig Platz im Spritzgusswerkzeug vorhanden ist, um beispielsweise einen Fräser über die Breite eines Stablichtleiterelements mehrfach ein- und wieder auszutauchen. Bei der Druckumformung vermittels Walzen und/oder Pressen verhält sich dies anders. Die hierfür vorgesehenen Walzen bzw. eine oder mehrere Pressen können beispielsweise in ihrer Erhabenheit beliebig fein bearbeitet werden, da deren konvexe, auf das Substrat einwirkende Oberfläche frei zugänglich ist, wodurch es zu keiner Einschränkung der minimal ausführbaren Fein- und Mikrostruktur kommt.

Das stoffschlüssige Verbinden erfolgt vorzugsweise frei von Lufteinschlüssen und/oder Einschlüssen.

Das stoffschlüssige Verbinden des Substrats mit einer oder mehreren Lichtleiterpartien des Lichtleiterelements kann durch Hinterspritzung des Substrats mit zumindest einer Lichtleiterpartie des Lichtleiterelements erfolgen.

Hierzu können die Verfahrensschritte:
- lage- und positionsrichtiges Einbringen des Substrats in ein Spritzgusswerkzeug, und
- Hinterspritzen des Substrats
vorgesehen sein.

Das Hinterspritzen des Substrats erfolgt vermittels eines transparenten Kunststoffes, beispielsweise PMMA (Polymethylmethacrylat) für die Lichtleiterpartien des Lichtleiterelements.

Das stoffschlüssige Verbinden des Substrats mit einer weiteren, von einer wie zuvor beschrieben zunächst mit einer Schicht versehenen ersten Lichtleiterpartie durch die Schicht getrennten Lichtleiterpartie kann durch Wiederholung der beschriebenen Vorgehensweise erfolgen, wobei anstelle des Substrats die bereits mit einem Substrat versehene Lichtleiterpartie in das Soritzgusswerkzeug eingebracht wird bzw. nach deren Herstellung im Spritzgusswerkzeug verbleibt, und anschließend eine weitere Lichtleiterpartie im Spritzgusswerkzeug angespritzt wird. Sollen zwei oder mehr Schichten die aneinander angrenzenden Lichtleiterpartien beispielsweise zumindest abschnittsweise voneinander lichttechnisch trennen, so kann vor dem Anspritzen der weiteren Lichtleiterpartie eine zusätzliche Schicht beispielsweise in Form eines weiteren, entsprechend ausgeführten Substrats in das Spritzgusswerkzeug eingebracht werden. Dies kann beispielsweise dann vorgesehen werden, wenn eine erste Lichtleiterpartie als Lichteinkoppelpartie vorgesehen ist, innerhalb welcher ersten Lichtleiterpartie eine Propagation des eingekoppelten Lichts entlang des Lichtleiterelements frei von Auskopplung erwünscht ist, wohingegen entlang des selben Abschnitts die benachbarte Lichtleiterpartie als Auskoppellichtleiterpartie dienen soll und hierzu die Schicht auf der der Auskoppellichtleiterpartie zugewandten Seite als Lichtumlenkfläche dienen soll. Hierzu muss die Schicht auf der Seite der Auskoppellichtleiterpartie mit Lichtumlenkstrukturen versehen sein, welche das auf sie auftreffende Licht unter einem Winkel zu einer Lichtaustrittsfläche der Auskoppellichtleiterpartie umlenkt, der einen Austritt des Lichts durch die Lichtaustrittsfläche frei von Totalreflexion bewirkt. Demgegenüber sollte die Schicht auf der der Lichteinkoppelpartie zugewandten Seite eher glatt und reflektierend ausgeführt sein, damit das Licht nicht an einer anderen optisch wirksamen Oberfläche aus der Lichteinkoppelpartie austritt. Um diese gegenteiligen Anforderungen zu erfüllen, können wie bereits vorher wiederholt erwähnt mehr als eine Schicht zwischen den Lichtleiterpartien vorgesehen sein. Eine erste, der Lichteinkoppelpartie zugeordnete und entsprechend den Anforderungen der Lichteinkoppelpartie ausgeführte Schicht, sowie eine zweite, der Auskoppellichtleiterpartie zugeordnete und entsprechend den Anforderungen der Auskoppellichtleiterpartie ausgeführte Schicht. Dazwischen kann zur Verbesserung der Trennung der unterschidelich ausgeführten Schichten eine oder mehrere weitere Schichten vorgesehen sein. Beispielsweise dazwischenliegende Schichten können durch Beschichtung der entsprechenden, der jeweiligen Lichtleiterpartie abgewandten Rückseiten der den entsprechenden Lichtleiterpartien zugeordneten Schichten hergestellt sein.

Alternativ kann das stoffschlüssige Verbinden durch Auflaminieren oder Aufkleben des Substrats auf mindestens eine oder mehrere durch die Schicht getrennte, beispielsweise in einem separaten Spritzgussprozess hergestellten Lichtleiterpartien des Lichtleiterelements erfolgen.

Ebenfalls denkbar ist eine thermomechanische Fixierung, um das Substrat mit zumindest einer Lichtleiterpartie des Lichtleiterelements stoffschlüssig zu verbinden. Die thermomechanische Fixierung erfolgt vorzugsweise durch Erwärmung vorzugsweise der mit zumindest einer Lichtleiterpartie des Lichtleiterelements zu verbindenden Oberfläche des Substrats vor dem Anpressen auf die entsprechende Lichtleiterpartie des Lichtleiterelements.

Das Substrat kann im Spritzgusswerkzeug und/oder während des Auflaminierens und/oder während des Klebens vorzugsweise mittels Vakuum festgehalten werden.

Das stoffschlüssige Verbinden erfolgt dabei derart, dass das Substrat an derjenigen bzw. denjenigen Stellen zu liegen kommt, an der bzw. an denen zwischen zwei oder mehr Lichtleiterpartien durch mindestens eine Schicht eine optisch wirksame Trennung vorgesehen ist.

Das Substrat kann dabei derart positioniert werden, dass dessen durch Umformung behandelte Oberfläche zumindest einen Teil wenigstens einer:
- Lichteinkoppelfläche und/oder
- Lichtaustrittsfläche und/oder
- Lichtumlenkfläche
zumindest einer Lichtleiterpartie des Lichtleiterelements bildet.

Das Substrat kann zumindest abschnittsweise ausgestanzt werden.

Das Substrat kann abschnittsweise mit einer Beschichtung versehen sein, um in solchen Abschnitten, die keine optisch wirksame Oberfläche bilden, einen Lichtaustritt aus wenigstens einer Lichtleiterpartie des Lichtleiterelements vollständig zu unterbinden.

Die Beschichtung kann durch Bedrucken und/oder Metallisieren hergestellt sein.

Eine oder mehrere Oberflächenpartien eines oder mehrerer bei der Behandlung des Substrats zumindest eine Oberfläche des Substrats umformenden Umformungswerkzeuge können wärmebeaufschlagt, beispielsweise beheizt sein. So kann beispielsweise bei einer Behandlung durch Umformung vermittels Walzen eine oder mehrere hierfür vorgesehene Walzen beheizt sein.

Alternativ oder zusätzlich kann das Substrat zumindest auf einer einer umformenden Behandlung zu unterziehenden Oberfläche wärmebeaufschlagt werden. Hierfür eignen sich beispielsweise eine Warm- bzw. Heißluftbeaufschlagung der entsprechenden mindestens einen Oberfläche des Substrats vor dem eigentlichen Umformen und/oder zwischen zwei aufeinanderfolgenden Behandlungen zur Umformung. Anstelle einer Warm- bzw. Heißluftbeaufschlagung oder zusätzlich zu einer solchen kann eine Wärmebeaufschlagung vermittels Infrarotstrahlung vorgesehen sein.

Wichtig ist hervorzuheben, dass wenn hier von einem Substrat die Rede ist, grundsätzlich auch mehrere Substrate an verschiedenen Stellen mit einer verbleibenden Partie des Lichtleiterelements verbunden sein können, von denen jedes Substrat zumindest eine optisch wirksame Oberfläche und/oder optische Grenzfläche zumindest einer Lichtleiterpartie des fertigen Lichtleiterelements bildet.

Ein dritter Gegenstand der Erfindung betrifft ein Leuchtmittel umfassend mindestens ein zuvor beschriebenes Lichtleiterelement sowie wenigstens eine zumindest einer Lichteinkoppelfläche des mindestens einen Lichtleiterelements zugeordnete Lichtquelle. In das Lichtleiterelement wird Licht der mindestens einen Lichtquelle an mindestens einer Lichteinkoppelfläche ein- und an mindestens einer von der Lichteinkoppelfläche verschiedenen Lichtaustrittsfläche wieder ausgekoppelt.

Die mindestens eine Lichtquelle und das Lichtleiterelement sind stoffschlüssig, beispielsweise durch Spritzgießen miteinander verbunden. Die unmittelbar an die wenigstens eine Lichtquelle angrenzende Fläche des Lichtleiterelements bildet dabei die mindestens eine Lichteinkoppelfläche des Lichtleiterelements.

Erfolgt die Lichteinkopplung via der mindestens einen Lichteinkoppelfläche in zwei oder mehr Lichtleiterpartien des Lichtleiterelements, so bilden diese die Lichteinkoppelpartie des Lichtleiterelements mit der oder den zur Lichteinkopplung von mindestens einer Lichtquelle zumindest eines Leuchtmittels vorgesehenen Lichteinkoppelflächen.

Die Lichtauskopplung kann nur via einer der Lichtleiterpartien erfolgen, oder sie kann gleichzeitig in mehrere, jedoch nicht alle, oder sie kann in alle Lichtleiterpartien erfolgen.

Ist die Lichtauskopplung nur via einer der Lichtleiterpartien vorgesehen, so bildet diese eine Auskoppellichtleiterpartie, welche die mindestens eine zum Austritt von an einer oder mehreren Lichteinkoppelflächen eingekoppelten Lichts vorgesehene Lichtaustrittsfläche umfasst.

Beispielsweise kann das Leuchtmittel ein oder mehrere Lichtleiterelemente sowie eine oder mehrere, das von ihnen ausgestrahlte Licht zumindest zum Teil in den wenigstens einen Lichtleiter einkoppelnde Lichtquellen umfassen.

Wenigstens eine LED kann als mindestens eine Lichtquelle des Leuchtmittels vorgesehen sein. Bei der Kombination von Lichtleiterelementen und LEDs können je ein Lichtleiterelement je LED, mehrere LEDs je Lichtleiterelement oder mehrere Lichtleiterelemente je LED zum Einsatz kommen

Ein Lichtleiterelement eines solchen Leuchtmittels kann beispielsweise als Primäroptik einer oder mehrerer LEDs dienen bzw. als eine solche Primäroptik ausgebildet sein, beispielsweise indem das Lichtleiterelement direkt mit seiner mindestens einen Lichteinkoppelfläche an eine oder mehrere LEDs angespritzt ist.

Durch Verwendung einer punktförmigen Lichtquelle, wie sie durch eine LED verwirklicht ist, lässt sich die mit der Erfindung erzielbare optische Güte nochmals steigern, weil eine derartige Lichtquelle eine optimale Auslegung des gesamten Strahlengangs von der Lichtentstehung bis zum Verlassen des Leuchtmittels durch die Lichtaustrittsfläche des Lichtleiterelements ermöglicht. Hierdurch kann das unerwünschte Austreten von Licht an anderen, als den vorgesehenen Stellen aus dem fingerförmigen Lichtleiterelement, das so genannte Lecklicht, zumindest annähernd vollständig vermieden werden, unabhängig davon, welcher Typ LED als Lichtquelle verwendet wird.

Dabei unterscheiden sich verschiedene Typen von LEDs im Wesentlichen durch deren elektrische Kontaktierung sowie dem Vorhandensein einer Kapselung und/oder einer Primäroptik, wie anhand der nachfolgenden Ausführungen deutlich wird.

Eine LED umfasst neben dem bereits Eingangs erwähnten mindestens einen LED-Chip auch mindestens ein Kontaktmittel zur elektrischen Kontaktierung des LED-Chips. Üblicherweise verfügt jede Leuchtdiode über einen Bonddraht je LED-Chip, welcher je einen LED-Chip elektrisch kontaktiert. Dieser Bonddraht bildet ein erstes Kontaktmittel für den LED-Chip der LED. Der Bonddraht kann mit einem ersten elektrischen Anschluss verbunden sein, welcher zur elektrischen Kontaktierung der LED beispielsweise mit einer ersten Leiterbahn eines Leuchtmittelträgers vorgesehen sein kann. Ein zweites Kontaktmittel für den LED-Chip der LED bildet der LED-Chip selbst. Zur elektrischen Kontaktierung kann der LED-Chip mit einem zweiten elektrischen Anschluss verbunden sein, welcher zur elektrischen Kontaktierung der LED beispielsweise mit einer zweiten Leiterbahn eines Leuchtmittelträgers vorgesehen sein kann.

Die LED kann darüber hinaus einen den LED-Chip unmittelbar umgebenden Primärreflektor aufweisen. Dieser Primärreflektor kann beispielsweise durch Wandungen einer den LED-Chip umgebenden Ausnehmung und/oder durch einen Napf gebildet sein, in dem der LED-Chip angeordnet ist. Der Napf kann mit dem erwähnten zweiten Anschluss verbunden sein, diesen bilden oder umfassen oder von diesem umfasst werden.

Bei speziellen Ausführungen von LEDs können einzelne oder alle Kontaktmittel selbst die elektrischen Anschlüsse bilden, wie nachfolgend zu den verschiedenen Kontaktierungsmöglichkeiten von LEDs ausgeführt.

Bekannt sind LEDs zur Durchsteckmontage (THT; Through Hole Technology), oberflächenmontierbare (SMD; Surface Mounted Device) LEDs und LEDs, bei denen der LED-Chip in Nacktmontagetechnik (COB; Chip On Board) direkt auf den Leuchtmittelträger gebondet wird.

THT-LEDs sind ein gängig bekannter Typ LEDs. Sie werden auch als bedrahtete LEDs bezeichnet, da sie aus einer zumindest in einer gewünschten Abstrahlrichtung transparenten Kapselung, z.B. in Form einer Umspritzung oder eines Vergusses bestehen, welche einen den LED-Chip mit einem ersten elektrischen Anschluss, beispielsweise in Form eines Anodenanschlusses verbindenden Bonddraht und den mit einem zweiten elektrischen Anschluss, beispielsweise in Form eines Kathodenanschlusses, verbundenen LED-Chip einschließt. Aus der Kapselung ragen nur die auch als Beinchen bezeichneten Drähte des ersten elektrischen Anschlusses und des zweiten elektrischen Anschlusses als die Anoden- und Kathodenanschlüsse der THT-LED. Der beispielsweise als Kathodenanschluss ausgeführte zweite elektrische Anschluss kann hierbei mit einem oben erwähnten Napf versehen sein, in dem der LED-Chip angeordnet ist. Der Bonddraht führt vom beispielsweise als Anodenanschluss ausgeführten ersten Anschluss von außerhalb des Napfs kommend zum LED-Chip.

SMD-LEDs sind ein weiterer bekannter Typ LEDs. SMD-LEDs bestehen aus einem Leadframe mit wenigstens einer Bestückungsfläche für mindestens einen LED-Chip sowie elektrischen Anschlussflächen. Das Leadframe ist von einem Kunststoffkörper mit zumindest einer die wenigstens eine Bestückungsfläche freihaltenden Ausnehmung teilweise umspritzt. Die elektrischen Anschlussflächen des Leadframes sind hierbei als die elektrischen Anschlüsse der SMD-LED zur späteren Oberflächen montage ebenfalls freigehalten. Der mindestens eine LED-Chip ist am Grund der zumindest einen zur wenigstens einen Bestückungsfläche reichenden Ausnehmung angeordnet und elektrisch kontaktiert. Dabei ist der LED-Chip auf einer mit wenigstens einer ersten elektrischen Anschlussfläche verbundenen ersten Partie des Leadframes angeordnet. Ein Bonddraht verbindet den LED-Chip mit einer zweiten Partie des Leadframes, die wiederum mit wenigstens einer zweiten elektrischen Anschlussfläche verbunden ist. Die an ihrem Grund zur Bestückungsfläche reichende Ausnehmung kann reflektorartig ausgestaltet sein. Dabei bilden die Wandungen der Ausnehmung den oben erwähnten Primärreflektor. Hierbei können die Wandungen reflektierend beschichtet sein.

COB-LEDs bestehen aus einem direkt auf einem Leuchtmittelträger anzuordnenden, ungehäusten LED-Chip und einem Bonddraht. Die Rückseite des LED-Chips bildet dabei den ersten elektrischen Anschluss der COB-LED. Zur elektrischen Kontaktierung wird der LED-Chip auf seiner Rückseite direkt mit einer ersten Leiterbahn eines Leuchtmittelträgers z.B. durch Löten oder Schweißen elektrisch verbunden. Der den zweiten elektrischen Anschluss der COB-LED bildende Bonddraht wird mit einer zweiten Leiterbahn des Leuchtmittelträgers ebenfalls z.B. durch Löten oder Schweißen elektrisch verbunden.

Der Vollständigkeit halber sei ergänzend erwähnt, dass auch andere Kontaktierungen wie z.B. der so genannte Flip-Chip-Aufbau möglich sind, bei dem die Kontaktmittel des LED-Chips direkt mit einem kontaktierten Substrat verbunden sind. In diesen Fällen wird kein Bonddraht verwendet.

Ein oder mehrere der erwähnten Leuchtmittelträger können dabei Teil des Leuchtmittels sein.

Das Lichtleiterelement und die mindestens eine LED können bevorzugt durch Spritzgießen miteinander verbunden sein. Hierbei kann das Lichtleiterelement an wenigstens eine LED angespritzt sein. In diesem Fall wird eine Lichteinkoppelfläche von der oder den jeweils an eine LED unmittelbar anstoßenden Flächen des Lichtleiterelements umfasst.

Hierdurch lässt sich die optische Güte des Leuchtmittels nochmals steigern, einerseits durch eine hohe Genauigkeit der gegenseitigen Ausrichtung verschiedenen Elemente des Leuchtmittels zueinander und andererseits durch eine Verringerung der Anzahl der optischen Übergänge bzw. der optischen Grenzflächen im Strahlengang des Lichts.

Ein vierter Gegenstand der Erfindung betrifft eine Kraftfahrzeugleuchte mit einem von einem Leuchtengehäuse und einer Lichtscheibe umschlossenen Leuchteninnenraum und mindestens einem in dem Leuchteninnenraum untergebrachten Leuchtmittel zur Erfüllung mindestens einer Lichtfunktion der Kraftfahrzeugleuchte. Mindestens ein im Leuchteninnenraum beherbergtes Leuchtmittel umfasst neben wenigstens einer Lichtquelle zumindest ein mit seiner wenigstens einen Lichteinkoppelfläche der wenigstens einen Lichtquelle zugeordnetes, zuvor beschriebenes Lichtleiterelement.

Das Lichtleiterelement kann Teil eines Leuchtmittels sein, oder als separates Bauteil im Leuchteninnenraum untergebracht sein.

Dem Lichtleiterelement kann mindestens ein Optikelement, wie etwa ein Reflektor und/oder eine Optikscheibe und/oder ein Rinnenkonzentrator zugeordnet sein, um nur einige mögliche Optikelemente aufzuzählen.

Die Kraftfahrzeugleuchte kann beispielsweise als Heckleuchte für ein Kraftfahrzeug ausgebildet sein. Alternativ kann die Kraftfahrzeugleuchte als eine hoch gesetzte dritte Bremsleuchte ausgebildet sein.

Vorteile gegenüber dem Stand der Technik ergeben sich unter Anderem durch eine kostengünstige Erzielung von optisch wirksamen Flächen bildenden, zwei oder mehr Lichtleiterpartien des Lichtleiterelements trennenden Schichten mit einer wesentlich feineren Oberflächengüte, als dies mit anderen Herstellungsverfahren für Lichtleiterelemente möglich ist. Hierdurch werden die Nachteile des Standes der Technik aufgehoben und es lässt sich vermittels eines solchen Lichtleiterelements im Vergleich zum Stand der Technik eine wesentlich höhere optische Güte erhalten. Dies ist vor allem dadurch bedingt, dass eine beim Stand der Technik auftretende, jedoch unerwünschte und die optische Güte störende Oberflächenrauigkeit sowohl planer Flächen, als auch der Teilflächen von Lichtauskoppelstrukturen durch Herstellung dieser Oberflächen vermittels Umformen in einem eigenen Prozess eliminiert oder in einer wesentlich höheren Genauigkeit und Feinheit gezielt hergestellt werden kann. Dadurch geht weniger des in das Lichtleiterelement eingekoppelten Lichts unnütz verloren und es wird ein um so größerer Anteil diesen Lichts einer vorgegebenen Lichtverteilung beitragend aus dem Lichtleiterelement wieder ausgekoppelt.

Weitere Vorteile gegenüber dem Stand der Technik ergeben sich dadurch, dass bei idealer Auslegung eines Lichtleiterelements dieses aufgrund seiner durch die Erfindung verbesserten Oberflächengüte exakter einer vorgegebenen Lichtverteilung beitragen kann und dabei durch die Absenkung der Untergrenze für die Feinheit der Oberflächenbeschaffenheit eine höhere optische Güte aufweist.

Ein zusätzlicher Vorteil gegenüber dem Stand der Technik ist der Erhalt einer besonders homogenen Ausleuchtung der Lichtauskoppelfläche des Lichtleiterelements durch eine oder mehrere, zunächst nur zur Propagation von in das Lichtleiterelement eingekoppelten Lichts vorgesehenen Lichteinkoppelpartien. Das in eine oder mehrere Lichteinkoppelpartien des Lichtleiterelements eingekoppelte Licht kann gezielt durch optisch durchlässige Bereiche in der mindestens einen die Lichtleiterpartien voneinander optisch wirksam trennenden Schicht von einer Lichteinkoppelpartie in eine Auskoppellichtleiterpartie überführt werden und so einer besonders homogenen Ausleuchtung der Lichtaustrittsfläche des Lichtleiterelements beitragen. Durch Variation der Abmessungen der Abschnitte der mindestens einen Schicht und/oder der Abmessungen der Bereiche zwischen den Abschnitten der Schicht kann die Lichtzuführung und/oder Lichtauskopplung in einzelnen Lichtleiterpartien des Lichtleiterelements gezielt gesteuert werden.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

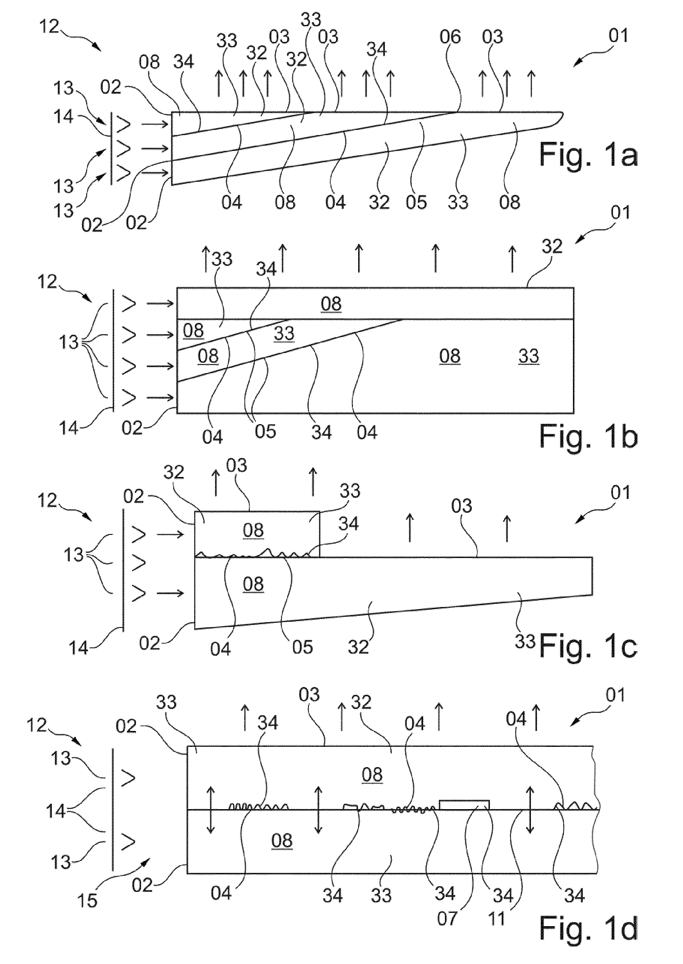

- Fig. 1: in Fig. 1 a), Fig. 1 b), Fig. 1 c) und Fig. 1 d) verschiedene Ausführungsbeispiele eines vorzugsweise für eine Kraftfahrzeugleuchte vorgesehenn Leuchtmittels mit einer oder mehreren Lichtquellen und einem der mindestens einen Lichtquelle mit seiner Lichteinkoppelfläche zugewandten Lichtleiterelement mit wenigstens zwei Lichtleiterpartien, die durch mindestens eine Schicht wenigstens abschnittsweise lichttechnisch voneinander getrennt sind, wobei zumindest eine Schicht der mindestens einen Schicht eine optisch wirksame Oberfläche mindestens einer der durch die Schicht lichttechnisch voneinander zumindest abschnittsweise voneinander getrennten Lichtleiterpartien bildet, und zumindest eine Schicht der mindestens einen Schicht vermittels mindestens eines stoffschlüssig mit wenigstens einer Lichtleiterpartie des Lichtleiterelements verbundenen Substrats mit zumindest einer durch Umformen behandelten Oberfläche hergestellt ist.

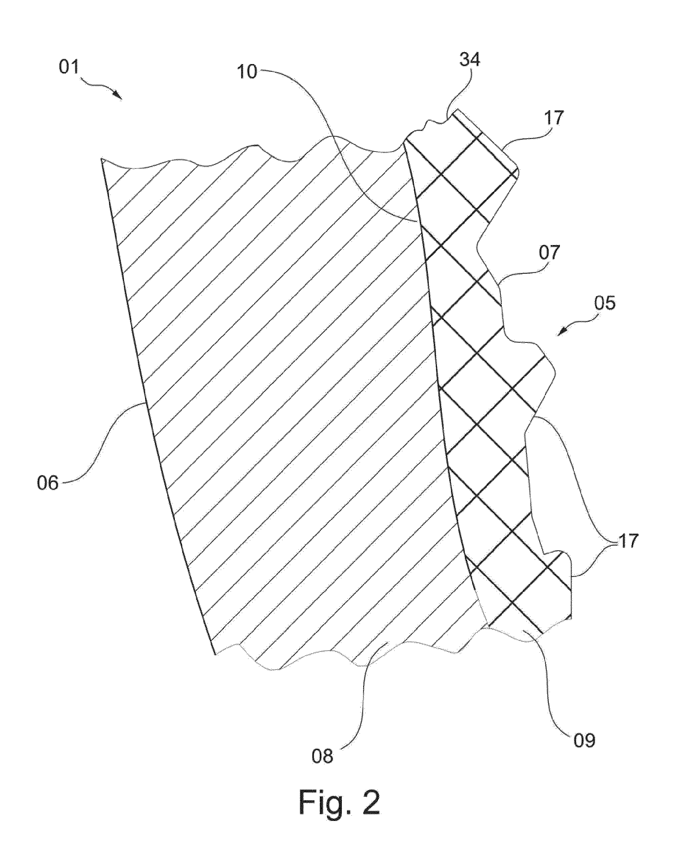

- Fig. 2: einen Querschnitt durch ein Lichtleiterelement während dessen Herstellung, zeigend eine eine optisch wirksame Oberfläche einer Lichtleiterpartie des fertigen Lichtleiterelements bildende Schicht bestehend aus wenigstens einer vermittels mindestens einer durch Umformen behandelten Oberfläche zumindest eines stoffschlüssig mit einer Lichtleiterpartie des Lichtleiterelements verbundenen Substrats.

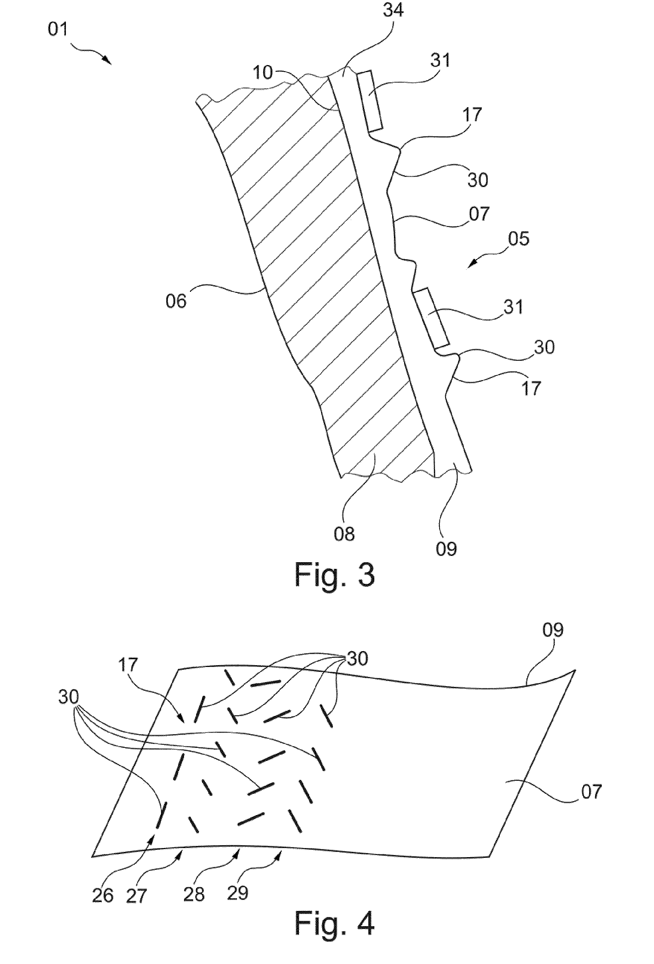

- Fig. 3: einen Querschnitt durch ein Lichtleiterelement während dessen Herstellung, zeigend eine eine optisch wirksame Oberfläche einer Lichtleiterpartie des fertigen Lichtleiterelements bildende Schicht bestehend aus wenigstens einer vermittels mindestens einer durch Umformen behandelten Oberfläche zumindest eines stoffschlüssig mit einer Lichtleiterpartie des Lichtleiterelements verbundenen Substrats.
- Fig. 4: eine eine optisch wirksame Oberfläche zumindest einer Lichtleiterpartie eines Lichtleiterelements bildende Schicht, welche durch eine Behandlung vermittels Umformung mit abschnittsweise präzise angeordneten Lichtauskoppelstrukturen versehene Oberfläche eines Substrats hergestellt ist.

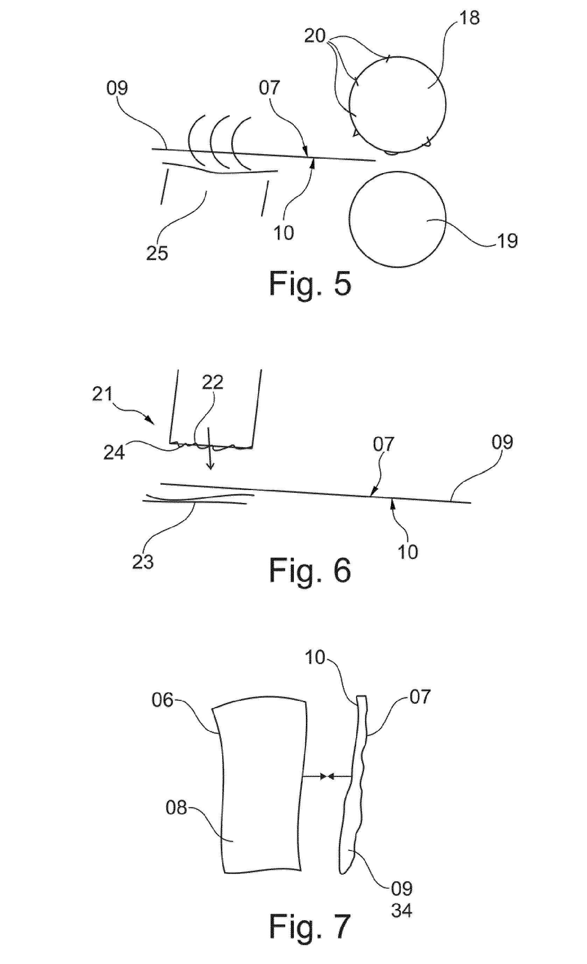

- Fig. 5: einen Verfahrensschritt eines Verfahrens zur Herstellung eines Lichtleiterelements, bei dem eine Oberfläche eines zuvor bereitgestelltes Substrats vermittels einer Behandlung per Druckumformung durch Walzen abschnittsweise mit Lichtauskoppelstrukturen versehen wird und eine gegenüberliegende Oberfläche des Substrats durch die Druckumformung vermittels Walzen frei von Lichtauskoppelstrukturen hergestellt wird.
- Fig. 6: einen Verfahrensschritt eines Verfahrens zur Herstellung eines Lichtleiterelements, bei dem eine Oberfläche eines zuvor bereitgestelltes Substrats vermittels einer Behandlung per Druckumformung durch Pressen und Prägen abschnittsweise mit Lichtauskoppelstrukturen versehen wird und eine gegenüberliegende Oberfläche des Substrats durch die Druckumformung vermittels Pressen frei von Lichtauskoppelstrukturen hergestellt wird.
- Fig. 7: einen Verfahrensschritt eines Verfahrens zur Herstellung eines Lichtleiterelements, bei dem ein Substrat mit mindestens einer in einem vorhergehenden Verfahrensschritt durch Umformung behandelten Oberfläche mit einer Lichtleiterpartie des Lichtleiterelements verbunden wird, so dass die durch Umformen behandelte Oberfläche des Substrats zu einer optisch wirksamen Oberfläche zumindest dieser Lichtleiterpartie des Lichtleiterelements wird.

Ein in den Fig. 1 bis Fig. 4 und Fig. 7 ganz oder in Teilen dargestelltes, beispielsweise flächig oder stabförmig, vorzugsweise beispielsweise in einer Ebene und/oder besonders bevorzugt dreidimensional im Raum gekrümmt verlaufend ausgebildetes Lichtleiterelement 01 weist mindestens eine Lichteinkoppelfläche 02 sowie mindestens eine Lichtaustrittsfläche 03 auf. Darüber hinaus kann das Lichtleiterelement 01 mindestens eine wenigstens einer Lichtaustrittsfläche 03 zugeordnete Lichtumlenkfläche 04 aufweisen.

Demnach kann das Lichtleiterelement 01 mindestens eine Lichteinkoppelfläche 02 sowie mindestens eine von der wenigstens einen Lichteinkoppelfläche 02 verschiedene Lichtaustrittsfläche 03 aufweisen. Darüber hinaus kann das Lichtleiterelement 01 wenigstens eine von der zumindest einen Lichtaustrittsfläche 03 verschiedene Lichtumlenkfläche 04 aufweisen.

Das Lichtleiterelement 01 weist mindestens zwei miteinander stoffschlüssig verbundene Lichtleiterpartien 08 auf, von denen zumindest eine Lichtleiterpartie 08 eine zumindest eine Lichtaustrittsfläche 03 umfassende Auskoppellichtleiterpartie 32 und mindestens eine Lichtleiterpartie 08 eine wenigstens eine Lichteinkoppelfläche 02 umfassende Lichteinkoppelpartie 33 des Lichtleiterelements 01 bildet.

Dabei kann eine Auskoppellichtleiterpartie 32 gleichzeitig als Lichteinkoppelpartie 33 fungieren und umgekehrt, abhängig davon, ob die entsprechende Lichtleiterpartie 08 eine Lichteinkoppelfläche 02 und/oder eine Lichtaustrittsfläche 03 aufweist.

Zwischen den Lichtleiterpartien ist zumindest abschnittsweise mindestens eine Schicht 34 umfassend beispielsweise spiegelnde und/oder opake und/oder lichtumlenkende und/oder lichtauskoppelnde Elemente eingebracht, von welcher mindestens einen Schicht 34 wenigstens eine Schicht 34 zumindest für eine der Lichtleiterpartien 08 eine optisch wirksame Oberfläche 05 bildet.

Durch eine Variation der Abmessungen der Abschnitte der mindestens einen Schicht 34 und/oder der Abmessungen zwischen den Abschnitten der Schicht 34 kann die Lichtzuführung und/oder Lichtauskopplung in einzelnen Lichtleiterpartien 08 des Lichtleiterelements 01 gezielt gesteuert werden.

Dabei ist eine zumindest abschnittsweise Lichtzuführung und/oder eine zumindest abschnittsweise Lichtauskopplung in den einzelnen Lichtleiterpartien 08 sowie die Lichtüberkopplung zwischen den Lichtleiterpartien 08 durch die Abmessungen der Abschnitte der mindestens einen Schicht 34 und/oder der Abmessungen eines oder mehrerer Bereiche zwischen den Abschnitten der mindestens einen Schicht 34, die frei von der mindestens einen Schicht (34) ausgeführt sind, gezielt einstellbar.

Beispiele für optisch wirksame Oberflächen des Lichtleiterelements 01 sind die mindestens eine Lichteinkoppelfläche 02, die mindestens eine Lichtaustrittsfläche 03, sowie gegebenenfalls die mindestens eine wenigstens einer Lichtaustrittsfläche 03 zugeordnete Lichtumlenkfläche 04.

Dementsprechend kann zumindest eine Schicht 34 eine solche optisch wirksame Oberfläche ganz oder teilweise bilden oder umfassen, oder von einer solchen optisch wirksamen Oberfläche umfasst sein. Ein einfaches Beispiel für eine durch eine Schicht 34 gebildete optisch wirksame Oberfläche 05 zumindest einer Lichtleiterpartie 08 des Lichtleiterelements 01 ist ein Lichtumlenkfläche 04, vermittels der in Fig. 1 durch Pfeile angedeutetes Licht in Richtung einer benachbarten Lichtleiterpartie 08 umgelenkt wird, um in diese benachbarte Lichtleiterpartie 08 überzutreten, oder in Richtung einer Lichtaustrittsfläche 03 umgelenkt wird, auf welche das Licht dann unter einem Winkel auftrifft, unter dem keine Totalreflexion auftritt und das Licht aus dem Lichtleiterelement 01 austritt.

Auch eine oder mehrere verbleibende Oberflächen 06 des Lichtleiterelements 01 können optisch wirksame Oberflächen 05 bilden, beispielsweise sofern diese frei von einer unerwünschten Lichtauskopplung durch Totalreflexion zur Lichtführung im Lichtleiterelement 01 beitragen. Diese verbleibenden Oberflächen 06 können grundsätzlich ebenfalls durch eine Schicht gebildet sein, jedoch nicht durch eine Lichtleiterpartien 08 des Lichtleiterelements 01 zumindest abschnittsweise beispielsweise lichttechnisch trennende Schicht 34.

Wenigstens eine optisch wirksame Oberfläche 05 bildende Schicht 34 und/oder ein Teil einer solchen kann auf einer Oberfläche 07, 10 wenigstens eines stoffschlüssig mit mindestens einer Lichtleiterpartie 08 des Lichtleiterelements 01 verbundenen Substrats 09 ausgebildet sein.

Eine oder mehrere wenigstens eine optisch wirksame Oberfläche 05 zumindest einer Lichtleiterpartie 087 des Lichtleiterelements 01 bildenden Schichten können durch Umformung behandelte Oberflächen 07, 10 eines Substrats 09 umfassen.

Das Substrat 09 kann zumindest abschnittsweise mit einer Beschichtung 31 versehen sein. Eine solche Beschichtung 31 kann beispielsweise durch Bedrucken und/oder Metallisieren hergestellt sein.

Das Substrat 09 ist bevorzugt vollflächig stoffschlüssig mit zumindest einer Lichtleiterpartie 08 des Lichtleiterelements 01 verbunden.

Das zumindest eine Schicht 34 umfassende Substrat 09 kann mit seiner eine optisch wirksame Oberfläche 05 zumindest einer Lichtleiterpartie 08 des Lichtleiterelements 01 bildenden Oberfläche 07 erhaben über oder bündig mit einer umliegenden Oberfläche 11 einer Lichtleiterpartie 08 des Lichtleiterelements 01 ausgeführt sein.

Die wenigstens eine optisch wirksame Oberfläche 05 zumindest einer Lichtleiterpartie 08 des Lichtleiterelements 01 bildende Oberfläche 07 des Substrats 09 ist beispielsweise durch Umformung des Substrats 09 bzw. zumindest einer dessen Oberflächen 07, 10 hergestellt.

Durch Umformen, insbesondere durch Druckumformen, wie etwa durch Walzen und/oder Pressen und/oder Prägen, wird eine wesentlich höhere Oberflächengüte erhalten, als beispielsweise durch Spritzguss und/oder Bedrucken überhaupt möglich. Dies liegt daran, dass die Feinheit der Oberflächengüte der beim Spritzguss notwendigen Spritzgussformen durch die Werkzeuge beschränkt ist, mit denen unter vertretbarem Aufwand die Spritzgussformen ausgehoben werden. Zwar besteht grundsätzlich die Möglichkeit, die durch die Werkzeuge verursachte verbleibende Rauhigkeit bzw. mangelnde Feinheit der Beschaffenheit der Oberfläche der Spritzgussformen beispielsweise durch eine Beschichtung zu egalisieren, jedoch sind solche Beschichtungen nicht Abnutzungsbeständig, wodurch sich von Spritzgussteil zu Spritzgussteil dessen Oberflächengüte verschlechtert. Im Rahmen hoher Qualitätsanforderungen, insbesondere im Automobilbereich, ist dies nicht serientauglich, zumal nach etwa einhundert mit einer Spritzgussform hergestellten Spritzgussteilen eine solche Beschichtung abgenutzt ist. Ein weiterer Nachteil ist, dass sich Beschichtungsmaterial aufgrund der Abnutzung in den Spritzgussteilen wieder findet, insbesondere an dessen Oberflächen.

Demgegenüber verbessert die durch Umformung erzielbare höhere Präzision und feinere Beschaffenheit zumindest einer optisch wirksamen Oberfläche 05 zumindest einer Lichtleiterpartie 08 des Lichtleiterelements 01 dessen optische Güte maßgeblich.

Das Material des Substrats 09 und das Material zumindest einer Lichtleiterpartie 08 des Lichtleiterelements 01 können gleiche oder unterschiedliche optische Brechungsindizes aufweisen.

Beim Ausgangshalbzeug des Substrats 09 handelt es sich vorzugsweise um dünne Platten und/oder Folien, welche in ihrer flächigen Ausdehnung wesentlich größere Abmessungen aufweisen, als normal hierzu. Ein solches Substrat kann als zweidimensional bezeichnet werden, da es als nennenswerte Oberflächen nur eine Oberseite und Unterseite aufweist. Die Oberseite und Unterseite verbindende Schmalseiten weisen hierbei keine nennenswerte Abmessungen auf.

Die wenigstens eine eine optisch wirksame Oberfläche 05 zumindest einer Lichtleiterpartie 08 des Lichtleiterelements 01 bildende Schicht, welche durch eine Behandlung zumindest einer Oberfläche 07, 10 des Substrats 09 vermittels Umformen hergestellt sein kann, bildet wenigstens zum Teil:
- mindestens eine wenigstens einer Lichtaustrittsfläche 03 zugeordnete Lichtumlenkfläche 04, welche im Lichtleiterelement 01 geführtes Licht innerhalb des Lichtleiterelements 01 gezielt in einer oder mehreren Richtungen zu wenigstens einer Lichtaustrittsfläche 03 hin umlenkt, so dass in das Lichtleiterelement 01 an dessen mindestens einer Lichteinkoppelfläche 02 von einer Lichtquelle 13 eingekoppeltes Licht an der entsprechenden, zumindest einen der mindestens einen Lichtumlenkfläche 04 zugeordneten Lichtaustrittsfläche 03 gegebenenfalls unter Brechung beim Übergang vom Material des Lichtleiterelements 01 zum umgebenden Medium, beispielsweise zur umgebenden Luft, oder frei von Brechung aus dem Lichtleiterelement 01 ausgekoppelt wird und/oder
- mindestens eine Lichtumlenkfläche 04, welche in eine Lichtleiterpartie 08 eingekoppeltes Licht zu dessen Überkopplung in eine andere Lichtleiterpartie 08 umlenkt.

Alternativ oder zusätzlich kann zumindest eine wenigstens abschnittsweise eine optisch wirksame Oberfläche 05 des Lichtleiterelements 01 bildende Schicht, welche beispielsweise eine durch Umformen behandelte Oberfläche 07, 10 des Substrats 09 umfassen kann, wenigstens zum Teil eine optisch wirksame Oberfläche 05 bilden, welche frei von einer unerwünschten Lichtauskopplung durch Totalreflexion zur Lichtführung in zumindest einer Lichtleiterpartie des Lichtleiterelements 01 beiträgt.

Die wenigstens eine optisch wirksame Oberfläche 05 des Lichtleiterelements 01 bildende Schicht, die durch ein Substrat 09 mit einer oder mehreren durch Umformen behandelten Oberfläche 07, 10 hergestellt sein kann, kann wie in Fig. 2, Fig. 3, Fig. 4 dargestellt wenigstens zum Teil mit Lichtauskoppelstrukturen 17 versehen sein.

Diese Lichtauskoppelstrukturen 17 können Prismenelemente 30 umfassen.

Das Substrat 09 kann alternativ oder zusätzlich zumindest abschnittsweise mit einer beispielsweise durch Bedrucken und/oder Metallisieren hergestellten Beschichtung 31 versehen sein, beispielsweise um einen Lichtübertritt von einer Liuchtleiterpartie 08 in eine benachbarte Lichtleiterpartie 08 vollständig zu unterbinden.

Das Substrat 09 kann hierbei zunächst transparent sein, bevor abschnittsweise eine Beschichtung aufgetragen wird.

Im Gegensatz zum Umformen stellt das Bedrucken bzw. Aufdrucken ebenso wie das Metallisieren z.B. einer den Lichtaustritt beschränkenden Schablone ein Beschichtungsverfahren dar.

Das Substrat 09 kann Bereichen, zwischen den durch wenigstens eine Schicht 34 beispielsweise zumindest abschnittsweise lichttechnisch voneinander getrennten Lichtleiterpartien 08 des Lichtleiterelements 01, die lichttechnisch wirksame Trennung aufgehoben sein soll, zumindest teilweise ausgestanzt sein.

Grundsätzlich ist auch denkbar, das in den Bereichen, die frei von einer Schicht 34 ausgeführt sind, die Lichtleiterpartien 08 lichttechnisch voneinander getrennt sind, wohingegen in den mit der Schicht 34 versehenen Abschnitten eine lichttechnische Interaktion zwischen den Lichtleiterpartien 08 stattfindet.

Mindestens ein Lichtleiterelement 01 mit mehreren, zumindest:
- mindestens eine Lichteinkoppelfläche 02,
- mindestens eine Lichtaustrittsfläche 03, sowie gegebenenfalls
- mindestens eine wenigstens einer Lichtaustrittsfläche 03 zugeordnete Lichtumlenkfläche 04
aufweisenden Lichtleiterpartien 08 kann Teil eines in Fig. 1 dargestellten Leuchtmittels 12 sein, welches neben dem Lichtleiterelement 01 wenigstens eine zumindest einer Lichteinkoppelfläche 02 zugeordnete Lichtquelle 13 umfasst. Das von der Lichtquelle 13 ausgestrahlte Licht wird via der Lichteinkoppelfläche 02 in das Lichtleiterelement 01 eingekoppelt, darin vorzugsweise durch Totalreflexion geführt, bis es an einer Lichtaustrittsfläche 03 aus dem Lichtleiterelement 01 austritt. Vorher kann das Licht an einer eine Lichtumlenkfläche 04 bildenden Schicht 34 in einer solchen Richtung zur Lichtaustrittsfläche 03 hin umgelenkt werden, dass es gegebenenfalls unter Brechung beim Übergang vom Material des Lichtleiterelements 01 zur Umgebung aus dem Lichtleiterelement 01 austreten kann.

Bei mindestens einer Lichtquelle 13 handelt es sich bevorzugt um wenigstens eine LED 14.

Das Lichtleiterelement 01 und die mindestens eine Lichtquelle 13 können miteinander verbunden sein, beispielsweise indem das Lichtleiterelement 01, bevorzugt mit mindestens einer eine Lichteinkoppelpartie 33 bildenden Lichtleiterpartie 08, im Spritzguss unmittelbar an eine als LED 14 ausgeführte Lichtquelle 13 angespritzt ist. Hierdurch wird ein optischer Übergang zwischen Lichtquelle 13 und Lichtleiterelement 01 vermieden. Dies verbessert die optische Güte im Vergleich zu einer Ausführung mit einem Luftspalt 15 zwischen Lichtquelle 13 und Lichtleiterelement 01. Die Verbesserung wird einerseits durch den Verzicht auf den Luftspalt 15 einhergehend mit dem Entfall einer oder - sofern die Lichtquelle 13 mit einer Primäroptik versehen ist - zweier optischer Grenzflächen, und andererseits durch die Vermeidung von Ausrichtungsfehlern zwischen Lichtquelle 13 und Lichtleiterelement 01 erhalten.

Die Lichteinkoppelfläche 02 wird in diesem Fall von der oder den jeweils an eine Lichtquelle 13 unmittelbar anstoßenden Oberflächenpartien einer oder mehrerer Lichtleiterpartien 08 des Lichtleiterelements 01 umfasst.

Ein Verfahren zur Herstellung eines zuvor beschriebenen Lichtleiterelements 01 sieht vor, dass:
- zunächst eine erste Lichtleiterpartie 08 stoffschlüssig mit mindestens einer, in einem oder mehreren Abschnitten vorgesehenen Schicht 34 versehen wird,
- anschließend eine zweite Lichtleiterpartie 08 auf der mit mindestens einer Schicht 34 versehenen Seite der ersten Lichtleiterpartie 08 stoffschlüssig mit dieser verbunden wird, und
- dann eine gegebenenfalls vorgesehene dritte oder weitere Lichtleiterpartie 08 entsprechend nach dem Auftragen wenigstens einer weiteren Schicht 34 auf der zweiten und/oder der ersten Lichtleiterpartie 08 auf der mit der mindestens einen weiteren Schicht 34 versehenen Seite der zweiten und/oder ersten Lichtleiterpartie 08 stoffschlüssig mit dieser oder diesen verbunden wird.

Mindestens eine Schicht 34 kann durch eine Beschichtung 31 hergestellt sein. Die Beschichtung 31 kann beispielsweise durch Sputtern, chemische Gasphasenabscheidung oder physikalische Gasphasenabscheidung erfolgen. Alternativ oder zusätzlich kann mindestens eine Schicht 34 durch Auftragen eines zunächst flüssigen Werkstoffs hergestellt sein, der dann beispielsweise unter elektromagnetische Strahlung, wie etwa ultraviolettem Licht aushärtet. Denkbar und bevorzugt ist jedoch zumindest eine Schicht 34 der mindestens einen Schicht 34 durch ein festes, flächiges und dadurch zweidimensionales Substrat 09, wie etwa eine Folie oder dergleichen auszubilden, dessen eine oder beide Oberflächen 07, 10 in einem separaten Behandlungsprozess behandelt werden, und an welches anschließend zumindest eine der beispielsweise durch die mindestens eine Schicht 34 wenigstens abschnittsweise lichttechnisch wirksam getrennten Lichtleiterpartien 08 beispielsweise in einem Spritzgussprozess angespritzt wird.

Ein solches anspritzen kann beispielsweise vermittels eines einleitend beschriebenen In-Mold-Labeling (IML) oder In-Mold-Decoration (IMD) Prozesses erfolgen.

Damit kann ein Verfahren zur Herstellung eines zuvor beschriebenen Lichtleiterelements zur Herstellung mindestens einer Schicht 34 die zusätzlichen Verfahrensschritte:
- Bereitstellung eines wenigstens eine Schicht 34 bildenden Substrats 09, sowie
- Behandlung wenigstens einer Oberfläche 07, 10 des Substrats 09 durch Umformung des Substrats 09,
woran sich beginnend mit dem zumindest abschnittsweise stoffschlüssigen Verbinden des Substrats 09 mit einer Lichtleiterpartie 08 des Lichtleiterelements 01 die verbleibenden Verfahrensschritte anschließen.

Der Verfahrensschritt, wonach zumindest eine Lichtleiterpartie 08 des Lichtleiterelements 01 zumindest abschnittsweise stoffschlüssig mit mindestens einer, in einem oder mehreren Abschnitten vorgesehenen Schicht 34 versehen wird, sieht dabei das stoffschlüssige Versehen des Substrats 09 mit einer Lichtleiterpartie 08 des Lichtleiterelements 01 vor.

Ein Verfahren zur Herstellung eines zuvor beschriebenen Lichtleiterelements 01, bei dem mindestens ein Substrat 09 mit wenigstens einer in einem separaten Prozess behandelten Oberfläche 07, 10 zumindest eine Schicht 34 der einen oder mehreren, beispielsweise zumindest abschnittsweise zwei oder mehrere Lichtleiterpartien 08 des Lichtleiterelements 01 lichttechnisch wirksam trennenden Schichten 34 bildet, kann nach der Bereitstellung eines bevorzugt transparenten Substrats 09 in einem ersten Verfahrensschritt in einem zweiten Verfahrensschritt zur Behandlung wenigstens einer Oberfläche 07, 10 des Substrats 09 vermittels Umformung bevorzugt eine Druckumformung vorsehen.

Bei der Behandlung durch Umformen können zumindest abschnittsweise Lichtauskoppelstrukturen 17 auf eine oder mehrere behandelte Oberflächen 07, 10 des Substrats 09 geprägt werden.

Das Umformen vermittels Druckumformung kann beispielsweise wie in Fig. 5 dargestellt durch Walzen erfolgen. Hierbei wird das bereitgestellte Substrat 09 zu dessen Behandlung zwischen mindestens zwei Walzen 18, 19 durchgeführt. Dabei kann eine Oberfläche 07 des Substrats 09 oder es können beide Oberflächen 07, 10 des Substrats 09 gleichzeitig mit Lichtauskoppelstrukturen 17 versehen werden, beispielsweise indem zumindest eine Walze 18 mit Lichtauskoppelstrukturen 17 auf wenigstens eine Oberfläche 07, 10 des Substrats 09 beispielsweise prägenden Walzenoberflächenpartien 20 versehen ist.

Das Umformen vermittels Druckumformung kann beispielsweise wie in Fig. 6 dargestellt alternativ oder zusätzlich durch Pressen erfolgen. Hierbei wird das bereitgestellte Substrat 09 zu dessen Behandlung durch mindestens eine Presse 21 durchgeführt. Auch hierbei kann eine Oberfläche 07 des Substrats 09 oder es können beide Oberflächen 07, 10 des Substrats 09 gleichzeitig mit Lichtauskoppelstrukturen 17 versehen werden, beispielsweise indem zumindest eine Pressfläche 22, 23 mit Lichtauskoppelstrukturen 17 auf wenigstens eine Oberfläche 07, 10 des Substrats 09 beispielsweise prägenden Pressflächenpartien 24 versehen ist.

Grundsätzlich können eine oder mehrere Oberflächenpartien eines oder mehrerer bei der Behandlung des Substrats 09 zumindest eine Oberfläche 07, 10 des Substrats 09 umformenden Umformungswerkzeuge, beispielsweise wie in Fig. 5 dargestellt eine oder beide der Walzen 18, 19, und/oder wie in Fig. 6 dargestellt die Presse 21 bzw. eine oder mehrere deren Pressflächen 22, 23 wärmebeaufschlagt, beispielsweise beheizt sein.

Hierzu ergänzend oder anstelle einer Wärmebeaufschlagung eines Umformwerkzeugs kann das Substrat 09 zumindest auf einer einer umformenden Behandlung zu unterziehenden Oberfläche 07, 10 vermittels einer hierfür vorgesehenen Wärmebeaufschlagungseinrichtung 25 wärmebeaufschlagt werden, wie in Fig. 5 dargestellt, noch bevor es vom Umformwerkzeug behandelt wird. Denkbar ist beispielsweise eine Warm- bzw. Heißluftbeaufschlagung der entsprechenden mindestens einen Oberfläche 07, 10 des Substrats 09 und/oder eine Wärmebeaufschlagung vermittels Infrarotstrahlung vor dem Umformen und/oder zwischen zwei aufeinanderfolgenden Behandlungen zur Umformung.

Insbesondere beim Umformen durch Walzen und/oder Pressen können Lichtauskoppelstrukturen 17 verwirklicht werden, wie sie im Spritzguss nicht möglich sind. So kann beispielsweise vermittels Walzen 18, 19 von denen beispielsweise eine mit Lichtauskoppelstrukturen 17 prägenden Walzenoberflächenpartien 20 versehen ist, Lichtauskoppelstrukturen 17 wie beispielsweise in Fig. 4 derart angeordnet hergestellt werden, wie sie in ihrer Fein- und Mikrostrukturierung insbesondere im Spritzguss und/oder durch Beschichten, wie etwa Bedrucken, nicht hergestellt werden können. So können beispielsweise wie in Fig. 4 dargestellt Lichtauskoppelstrukturen 17 mit in benachbarten Reihen 26, 27, 28, 29 unterschiedlich angestellten Prismenelementen 30 unter geringem Aufwand auf zumindest einer Oberfläche 07, 10 des Substrats 09 hergestellt werden, welche erst im Anschluss an deren Herstellung in einem dritten Verfahrensschritt in ein Lichtleiterelement 01 eingebracht werden.

In einem solchen, in Fig. 7 angedeuteten dritten Verfahrensschritt erfolgt ein stoffschlüssiges Verbinden des Substrats 09 mit mindestens einer dessen Oberflächen 07, 10 mit wenigstens einer Lichtleiterpartie 08 des Lichtleiterelements 01. Anschließend kann gegebenenfalls eine weitere Schicht 34 auf die der Lichtleiterpartie 08 abgewandte Oberfläche 07 des Substrats 09 aufgebracht werden, bevor diese dann mit einer weiteren, zumindest abschnittsweise durch die mindestens ein Substrat 09 umfassende wenigstens eine Schicht 34 lichttechnisch wirksam getrennten Lichtleiterpartie 08 zum fertigen Lichtleiterelement 01 stoffschlüssig versehen wird.

Sind mehrere jeweils durch eine oder mehrere Schichten 34 zumindest abschnittsweise lichttechnisch wirksam getrennte Lichtleiterpartien 08 vorgesehen, so kann die beschriebene Vorgehensweise jeweils wiederholt werden, bis die entsprechende Anzahl zumindest abschnittsweise lichttechnisch wirksam getrennter Lichtleiterpartien 08 zum fertigen Lichtleiterelement 01 aufgebaut ist.

Sofern nur eine Oberfläche 07 des Substrats 09 durch Umformung behandelt wurde, kann vorgesehen werden, dass das Substrat 09 in diesem dritten Verfahrensschritt mit dessen unbehandelt verbliebener Oberfläche 10 stoffschlüssig mit der verbleibenden Partie 08 des Lichtleiterelements 01 verbunden wird. Alternativ kann dies auch mit der behandelten Oberfläche 07 geschehen.

Das stoffschlüssige Verbinden erfolgt dabei vorzugsweise frei von Einschlüssen, wie etwa Lufteinschlüssen, derart, dass das Substrat 09 mit seiner durch Umformung hergestellten Oberfläche 07, 10 an derjenigen bzw. denjenigen Stellen zu liegen kommt, an der bzw. an denen eine oder mehrere, benachbarte Lichtleiterpartien 08 im fertigen Lichtleiterelement 01 lichttechnisch wirksam trennende Schichten 34 vorgesehen sind.

Das stoffschlüssige Verbinden des Substrats 09 mit mindestens einer Lichtleiterpartie 08 des Lichtleiterelements 01 kann beispielsweise durch
- Hinterspritzung des Substrats 09 mit mindestens einer Lichtleiterpartie 08 des Lichtleiterelements 01 vermittels lage- und positionsrichtigem Einbringen des Substrats 09 in ein Spritzgusswerkzeug und Hinterspritzen des Substrats 09 mit mindestens einer Lichtleiterpartie 08 des Lichtleiterelements 01, oder
- lage- und positionsrichtiges Auflaminieren des Substrats 09 auf mindestens eine Lichtleiterpartie 08 des Lichtleiterelements 01, oder
- lage- und positionsrichtiges Aufkleben des Substrats 09 auf mindestens eine Lichtleiterpartie 08 des Lichtleiterelements 01, oder
- lage- und positionsrichtige thermomechanische Fixierung des Substrats 09 auf mindestens eine Lichtleiterpartie 08 des Lichtleiterelements 01 erfolgen.

Zur lage- und positionsgenauen Ausrichtung des Substrats 09 während des dritten Verfahrensschritts kann das Substrat beispielsweise im Spritzgusswerkzeug und/oder während des Auflaminierens und/oder während des Klebens und/oder während der thermomechanischen Fixierung beispielsweise mittels Vakuum festgehalten werden.

In einem oder mehreren beispielsweise getrennt vor oder nach der Behandlung durch Umformen und in jedem Fall vor dem stoffschlüssigen Verbinden des Substrats 09 mit mindestens einer Lichtleiterpartie 08 des Lichtleiterelements 01 stattfindenden Verfahrensschritten kann das Substrat 09:
- zumindest abschnittsweise ausgestanzt, und/oder
- zumindest abschnittsweise mit einer Beschichtung 31 versehen werden.

Wichtig ist hervorzuheben, dass um eine Lichtverteilung beispielsweise gemäß der gesetzlichen Vorgaben und/oder ein möglichst homogenes Erscheinungsbild aus verschiedenen Betrachtungswinkeln zu erreichen, Lichtleiterelemente 01 zumeist auf Totaleflexion basierende Lichtauskoppelstrukturen und/oder streuende Oberflächen beispielsweise in Form einer Narbung besitzen. Die Herstellung dieser Lichtauskoppelstrukturen im Spritzgusswerkzeug sowie deren Abbildung im Kunststoffteil sind bezüglich Größe, Geometrie, Präzision oder Standzeit durch das Fertigungsverfahren der Spritzgusswerkzeuge - hierbei handelt es sich für Spritzgusswerkzeuge aus Stahl um Fräsen, Auswaschen des Werkzeugs - sowie den Spritzgussprozess stark eingeschränkt. Das Einbringen von Lichtauskoppelstrukturen mittels Fräsen, Senkerodieren in Spritzgusswerkzeuge aus Stahl impliziert deutliche Einschränkungen der Lichtauskoppelstrukturen und der Oberflächenqualität - wie etwa der Rauheit - der Lichtauskoppelstrukturen. Zudem werden die Geometrien im Spritzgusswerkzeug über die Lebensdauer des Spritzgusswerkzeugs ausgewaschen. Eine verbesserte Oberflächenqualität kann nur durch Diamant-Schaben erreicht werden, welches die umsetzbaren Geometrien jedoch stark einschränkt. Galvano-Einsätze, basierend auf Fräs- und Drehprozessen mit Diamant-Werkzeugen sind darüber hinaus kostenintensiv und besitzen eine deutlich verringerte Standzeit im Vergleich zu den Stahlwerkzeugen. Unabhängig vom Werkzeugeinsatz sind im Spritzgussprozess die feinen Strukturen sauber abzuformen. Dies stellt insbesondere für dickwandige Lichtleiterelemente eine Herausforderung dar, da die Schwindung des Werkstücks der Oberflächengüte sowie der Oberflächentreue entgegenwirkt. In der Praxis werden daher für dickwandigere Lichtleiterelemente oft zeitaufwändige und teure zwei- oder mehrkomponenten Spritzgussverfahren eingesetzt.

Um eine möglichst präzise Gestaltung der eine optisch wirksame Oberfläche zumindest eines Abschnitts einer Lichtleiterpartie 08 bildenden mindestens einen Schicht 34 einhergehend mit einer hohen optischen Güte des fertigen Lichtleiterelements 01 zu erhalten, sieht die Erfindung eine Trennung der Herstellung mindestens einer optisch wirksamen Oberfläche zumindest einer Lichtleiterpartie 08 des Lichtleiterelements 01 von dessen Lichtleiterpartien 08 vor. Dies wird durch die Behandlung einer oder mehrerer, eine optisch wirksame Oberfläche zumindest einer Lichtleiterpartie 08 des Lichtleiterelements 01 bildender, beispielsweise durch eine oder mehrere Oberflächen 07, 10 eines Substrats 09 gebildenten Schichten 34 erhalten, welches Substrat 09 anschließend in eine Spritzgussform eingelegt und nachfolgend mit wenigstens einer Lichtleiterpartie 08 des Lichtleiterelements 01 beispielsweise hinterspritzt wird, um ein einstückiges Lichtleiterelement 01 mit mindestens zwei, zumindest abschnittsweise durch wenigstens eine Schicht 34 lichttechnisch wirksam getrennten Lichtleiterpartien 08 zu erhalten.

Durch die getrennte Umformung des beispielsweise als Folie ausgebildeten Substrats 09 kann eine höchst präzise mikrostrukturierte Folie erhalten werden.

Der Erfindung liegt die Überlegung zu Grunde, getrennte Prozesse, von denen ein erster zur kostengünstigen Erzeugung höchstwertiger Oberflächenfeinheiten bzw. -güten geeignet ist, und ein zweiter erprobt und damit kostengünstig zur Herstellung von Lichtleiterelementekörpern geeignet ist, vorzusehen. Der erste Prozess erfolgt dabei unabhängig vom zweiten Prozess.

Hierdurch wird die Güte zumindest einer eine optisch wirksamen Oberfläche 05 zumindest einer Lichtleiterpartie 08 bildenden Schicht 34 eines Lichtleiterelements 01 mit zwei oder mehreren, durch mindestens eine Schicht 34 vermittels der optisch wirksamen Oberfläche 05 beispielsweise zumindest abschnittsweise lichttechnisch voneinander getrennten Lichtleiterpartien 08 in dem ersten Prozess festgelegt, bevor dessen Körper her- oder fertiggestellt und damit das Lichtleiterelement 01 erst fertiggestellt wird.

Mit anderen Worten erfolgt die Herstellung zumindest einer Oberfläche einer zwei Lichtleiterpartien 08 trennenden Schicht 34 in dem ersten Prozess, bevor durch Herstellung der Körper dessen Lichtleiterpartien 08 das Lichtleiterelement 01 erst hergestellt wird.

Die Erfindung ist insbesondere im Bereich der Herstellung von Lichtleiterelementen, wie sie beispielsweise in Verbindung mit Leuchtmitteln für Kraftfahrzeugleuchten vorgesehen sein können, gewerblich anwendbar.

### Bezugszeichenliste

- 01: Lichtleiterelement
- 02: Lichteinkoppelfläche
- 03: Lichtaustrittsfläche
- 04: Lichtumlenkfläche
- 05: optisch wirksame Oberfläche
- 06: verbleibende Oberfläche (des Lichtleiterelements)
- 07: Oberfläche (des Substrats)
- 08: Lichtleiterpartie
- 09: Substrat
- 10: Oberfläche (des Substrats)
- 11: umliegende Oberfläche (des Lichtleiterelements)
- 12: Leuchtmittel
- 13: Lichtquelle
- 14: LED
- 15: Luftspalt
- 16:
- 17: Lichtauskoppelstruktur
- 18: Walze
- 19: Walze
- 20: Walzenoberflächenpartie
- 21: Presse
- 22: Pressfläche
- 23: Pressfläche
- 24: Pressflächenpartie
- 25: Wärmebeaufschlagungseinrichtung
- 26: Reihe
- 27: Reihe
- 28: Reihe
- 29: Reihe
- 30: Prismenelement
- 31: Beschichtung
- 32: Auskoppellichtleiterpartie
- 33: Lichteinkoppelpartie
- 34: Schicht

## Patentansprüche

1. Lichtleiterelement (01) mit jeweils einer oder mehreren:
- Lichteinkoppelflächen (02) und
- Lichtaustrittsflächen (03)
sowie gegebenenfalls einer oder mehreren, zumindest einer Lichtaustrittsfläche (03) zugeordneten Lichtumlenkflächen (04), wobei das Lichtleiterelement (01) mindestens zwei miteinander stoffschlüssig verbundene Lichtleiterpartien (08) aufweist, von denen zumindest eine Lichtleiterpartie (08) eine zumindest eine Lichtaustrittsfläche (03) umfassende Auskoppellichtleiterpartie (32) und mindestens eine Lichtleiterpartie (08) eine wenigstens eine Lichteinkoppelfläche (02) umfassende Lichteinkoppelpartie (33) des Lichtleiterelements (01) bildet, **dadurch gekennzeichnet,**
**dass** zwischen den Lichtleiterpartien (08) zumindest abschnittsweise mindestens eine Schicht (34) eingebracht ist, von welcher mindestens einen Schicht (34) wenigstens eine Schicht (34) zumindest für eine der Lichtleiterpartien (08) eine optisch wirksame Oberfläche (05) bildet.

2. Lichtleiterelement nach Anspruch 1,
**dadurch gekennzeichnet,**
**dass** wenigstens eine optisch wirksame Oberfläche (05) bildende Schicht und/oder ein Teil einer solchen auf einer Oberfläche (07, 10) wenigstens eines stoffschlüssig mit mindestens einer Lichtleiterpartie (08) des Lichtleiterelements (01) verbundenen Substrats (09) ausgebildet ist.

3. Lichtleiterelement nach Anspruch 1 oder 2,
**dadurch gekennzeichnet,**
**dass** die wenigstens eine optisch wirksame Oberfläche (05) zumindest einer Lichtleiterpartie (08) des Lichtleiterelements (01) bildende Oberfläche (07, 10) des Substrats (09) durch Umformung des Substrats (09) hergestellt ist.

4. Lichtleiterelement nach Anspruch 1, 2 oder 3,
**dadurch gekennzeichnet,**
**dass** das Substrat (09) zumindest abschnittsweise mit einer Beschichtung (31) versehen ist.

5. Lichtleiterelement nach Anspruch 4,
**dadurch gekennzeichnet,**
**dass** die Beschichtung (31) durch Bedrucken und/oder Metallisieren hergestellt ist.

6. Verfahren zur Herstellung eines Lichtleiterelements (01) nach einem der vorhergehenden Ansprüche, wobei:
- zunächst eine erste Lichtleiterpartie (08) stoffschlüssig mit der mindestens einen, in einem oder mehreren Abschnitten vorgesehenen Schicht (34) versehen wird,
- anschließend eine zweite Lichtleiterpartie (08) auf der mit der mindestens einen Schicht (34) versehenen Seite der ersten Lichtleiterpartie (08) stoffschlüssig mit dieser verbunden wird, und
- dann eine gegebenenfalls vorgesehene dritte oder weitere Lichtleiterpartie (08) entsprechend nach dem Auftragen wenigstens einer weiteren Schicht (34) auf der zweiten und/oder der ersten Lichtleiterpartie (08) auf der mit der mindestens einen weiteren Schicht (34) versehenen Seite der zweiten und/oder ersten Lichtleiterpartie (08) stoffschlüssig mit dieser oder diesen verbunden wird.

7. Verfahren nach Anspruch 6,
**gekennzeichnet durch** die zusätzlichen Verfahrensschritte zur Herstellung mindestens einer Schicht (34):
- Bereitstellung eines wenigstens eine Schicht (34) bildenden Substrats (09),
- Behandlung wenigstens einer Oberfläche (07, 10) des Substrats (09) **durch** Umformung des Substrats (09),
woran sich beginnend mit dem zumindest abschnittsweise stoffschlüssiges Verbinden des Substrats (09) mit einer Lichtleiterpartie (08) des Lichtleiterelements (01) die verbleibenden Verfahrensschritte anschließen.

8. Verfahren nach Anspruch 6 oder 7,
**dadurch gekennzeichnet,**
**dass** die Behandlung wenigstens einer Oberfläche (07, 10) des Substrats (09) durch Umformung des Substrats (09) durch Druckumformung, bevorzugt durch Walzen und/oder Pressen und/oder Prägen erfolgt.

9. Verfahren nach Anspruch 6, 7 oder 8,
**dadurch gekennzeichnet,**
**dass** durch die Behandlung vermittels Umformen die als optisch wirksame Oberfläche (05) zumindest einer Lichtleiterpartie (08) des Lichtleiterelements (01) vorgesehene Oberfläche (07, 10) des Substrats (01) zumindest abschnittsweise mit Lichtauskoppelstrukturen (17) versehen wird.

10. Verfahren nach einem der Ansprüche 6 bis 9,
**dadurch gekennzeichnet,**
**dass** das stoffschlüssige Verbinden des Substrats (09) mit wenigstens einer Lichtleiterpartie (08) des Lichtleiterelements (01) durch:
- Hinterspritzung des Substrats (09) mit wenigstens einer Lichtleiterpartie (08) des Lichtleiterelements (01) vermittels lage- und positionsrichtiges Einbringen des Substrats (09) in ein Spritzgusswerkzeug, und Hinterspritzen des Substrats (09), oder
- Auflaminieren des Substrats (09) auf wenigstens eine Lichtleiterpartie (08) des Lichtleiterelements (01), oder
- Aufkleben des Substrats (09) auf wenigstens eine Lichtleiterpartie (08) des Lichtleiterelements (01), oder
- thermomechanische Fixierung
erfolgt.

11. Verfahren nach einem der Ansprüche 6 bis 10,
**dadurch gekennzeichnet,**
**dass** das Substrat (09) vor oder nach der Behandlung durch Umformen
- zumindest abschnittsweise ausgestanzt wird, und/oder
- zumindest abschnittsweise mit einer Beschichtung (31) versehen wird.

12. Leuchtmittel (12) umfassend mindestens ein Lichtleiterelement (01) mit zumindest wenigstens einer Lichtaustrittsfläche (03) und mindestens einer Lichteinkoppelfläche (02) sowie zumindest eine letzterer zugeordneten Lichtquelle (13),
**gekennzeichnet durch**
ein Lichtleiterelement (01) nach einem der Ansprüche 1 bis 5.

13. Leuchtmittel nach Anspruch 12,
**gekennzeichnet durch**
wenigstens eine LED (14) als mindestens eine Lichtquelle (13).

14. Leuchtmittel nach Anspruch 13,
**dadurch gekennzeichnet,**
**dass** das Lichtleiterelement (01) und die mindestens eine LED (14) bevorzugt durch Spritzgießen miteinander verbunden sind.

15. Kraftfahrzeugleuchte mit einem von einem Leuchtengehäuse und einer Lichtscheibe umschlossenen Leuchteninnenraum und mindestens einem in dem Leuchteninnenraum beherbergten Leuchtmittel (12) zur Erfüllung mindestens einer Lichtfunktion der Kraftfahrzeugleuchte, wobei das Leuchtmittel (12) ein Lichtleiterelement (01) mit mindestens einer Lichteinkoppelfläche (02) und mindestens einer Lichtaustrittsfläche (03) sowie mindestens eine der mindestens einen Lichteinkoppelfläche (02) zugeordnete Lichtquelle (13) umfasst, **gekennzeichnet durch**
mindestens ein Leuchtmittel (12) nach Anspruch 12, 13 oder 14.
